# EUROPEAN PATENT APPLICATION

(11) **EP 0 784 939 A1**
(43) Date of publication of application: **23.07.1997**
(21) Application number: 95910758.2
(22) Date of filing: 07.03.1995
(51) Int. Cl.: A23L 1/325, A23L 1/317

(54) **PROCESS FOR PRODUCING UNBLANCHED PASTY PROTEIN FOOD MATERIAL, PROTEIN FOOD MATERIAL PRODUCED THEREBY, AND PROTEIN FOOD PRODUCED THEREFROM**

(30) Priority: 06.10.1994 JP 270617/94
(71) Applicant: KABUSHIKI KAISHA KATAYAMA, Fukuoka-ken 807 (JP)
(72) Inventor: KATAYAMA, Hiroshi, Kitakyushu-shi-Fukuoka-ken 808-01 (JP); KATAYAMA, Taro, Kitakyushu-shi-Fukuoka-ken 808-01 (JP)
(74) Representative: Hansen, Bernd, Dr. Dipl.-Chem.
(86) International application number: JP9500368
(87) International publication number: WO9610928

(57) **Abstract**

This invention relates to a method for producing protein-based food ingredient which is excellent in flexible and elastic properties, nutritive value, free processability and have high utilization effect, low salt content in meat, obtained from water-unbleached fishes and shellfishes meat including meat in lower freshness and elasticity by kneading to give gelling ability and from live-stock meat and scrap meat by processing to pasty meat.

The method comprises the steps of: a gelling ability giving step wherein 3 to 22 weight parts of an aqueous salt solution, in 3 to 35% by weight concentraiton including NaCl and the like is added to 100 weight parts of the ingredient and the meat in the mixture is dissolved in salt and given gelling ability, a kneading/mixing step wherein 1 to 19 weight parts of an aqueous alkali solution in 3 to 25% by weight concentration is added and kneaded/mixed, an additive solution adding step wherein an additive solution including at least one of additive selected from the group consisting of saccharide, vitamin C and E preparations, and albumen powder is added, and a water mixing step wherein 1 to 80 weight parts of water is added.

## Description

### FIELD OF THE INVENTION

This invention is relates to a method for producing water-unbleached pasty food ingredient, and protein-based food ingredient obtained from this method and protein-based food using the ingredient. This method gives gelling ability to not only fish meats and meats of unbleached fishes and shellfishes of fresh-water and salt-water products, sea creatures such as whales and dolphins, and live-stock, but also tough, hard-to-use meats and meat scrap of them. As a result, the products obtained from this method are excellent in preservability and nutritive value.

Water-bleach comprises the steps of; stir the chopped fish meat in the water, remove blood, fat, water soluble protein, extract, etc.

### BACKGROUND OF THE INVENTION

In general, white and lean fish meat and blue-skinned fishes and shellfishes, krills and other mollusks are only being consumed as fresh fishs, salted products, and dried products. White meat fishes are also being used as fish paste products such as Kamaboko (boiled fish paste), Hanpen (boiled fish paste including yam), etc. which are made from ground fish meat. Ground fish meat is produced by properly processing the fish -body; the white fish meat is separated from the fish bodies, the meat is water-bleached, drained, and small bones, muscles and skin are removed, dewatered thoroughly and ground. On the other hand, live-stock meat is only being used as fresh raw seat and ham, canned products, smoked products.

On the land for preservation of water quality, fish-processing by the water-bleaching method requires a large scale facility for purifying waste water and large quantities of water. On the sea the method uses large quantities of water for bleaching-purposes and discharges waste water and useful nutrients such as low molecular protein-based nutritive components and fats into the sea, and this has resulted in serious sea pollution. for example, in the case of walleye polloks because low molecular nutrient including extract is discharged through the bleaching, although fish meat yield is about 42%, only myofibrillar protein (corresponds to 18 to 25% of fish body) is collected and utilized. In the case of fishes and shellfishes making good catch (lean fishes, blue-skinned fishes, krills), because content of fats, lipids and low molecular organic matters is high, although fish meat yield is about 55%, after water bleaching only myofibrillar protein (corresponds to 10 to 15% of fish body) is utilized. Facing population increase now going in the world, the practical use of animal protein is needed more and more. Moreover, ground raw ingredient or collective material of myofibrillar protein, contains chemicals such as saccharide, phosphates. Although these chemicals are used to prevent them from freezing denaturation, they pose a health problem for consumers. Moreover, live-stock meat has restrictions on utilization for the aged people because of its high-fat, calorie content and toughness. It has also the problem of being limited in its usage because a processing method that uses ground meat has not been developed. There is a strong need for the effective use of highly nutritive live-stock meat and for the development of a pure low-fat, and high-protein-content food product making the best use of the taste of it, but a processing method has not been developed yet.

### DISCLOSURE OF THE INVENTION

It is an object of this invention to solve problems described above. It is one of the objects of this invention to provide a method for producing protein-based food ingredient which uses whole the meat of unbleached fish/shellfish, fishes in lower freshness and elasticity, and live-stock meat and meat scrap to process to pasty meat. This protein-based food ingredient should be excellent in flexibility, elasticity, high in use-efficacy, highly nutritive, low in salt-content and not contain phosphates and nitrous acids and processed at will. Another object of this invention is to provide a highly nutritive protein-based food ingredient in high yield without denaturing or losing the low-molecular nutrients, myofibrillar protein. A further object of this invention is to provide a new type of protein-based food by which the protein-based food ingredient is combined with other food ingredients.

To accomplish these objects, in this invention a method for producing the unbleached pasty protein food ingredient and protein-based food ingredient obtained from this method and the protein-based food using these ingredients comprises as following:

A method for producing unbleached pasty protein food ingredient in claim 1 comprises the following steps of: a gelling ability giving step wherein 3 to 22 weight parts of an aqueous salts solution in 3 to 35% by weight concentration including at least one of salt selected from the group consisting of NaCl, KCl, CaCl₂ and MgCl₂ is added to and conducted granulation with 100 weight parts of protein raw ingredient made from unbleached fish/shellfish meat, live-stock meat and whale meat and an aqueous alkali solution impregnating step wherein 1 to 19 weight parts of an aqueous alkali solution in 3 to 25% by weight concentration is added, and conducted granulation or kneaded/mixed.

The method for producing the unbleached pasty protein food ingredient in claim 2 comprises the following steps of: the aqueous alkali solution impregnating step wherein 1 to 19 weight parts of the aqueous alkali solution in 3 to 25% by weight concentration is added to and conducted granulation or kneaded/mixed with 100 weight parts of the protein raw ingredient made from one or a mixture of the unbleached fish/shellfish meat, live-stock meat and whale meat: then the gelling ability giving step wherein 3 to 22 weight parts of the aqueous salt solution in 3 to 35% by weight concentration including at least one of salt selected from the group consisting of NaCl, KCl, CaCl₂ and MgCl₂ is added and conducted granulation.

The method for producing the unbleached pasty protein food ingredient in claim 3 comprises: after the gelling ability giving step or the alkali solution impregnating step in claim 1 or 2, an additive solution adding step wherein an aqueous solution including at least one of additive selected from the group consisting of saccharide, vitamin C preparation, vitamin E preparation, powdered albumen, antioxidant is added to and conducted granulation kneaded/mixed with fresh raw meat.

The method for producing the unbleached pasty protein food ingredient in claim 4 comprises: after the additive solution adding step in claim 3, a water mixing step wherein 1 to 80 weight parts of water is added to and mixed with 100 weight parts of the protein raw ingredient.

The method for producing the unbleached pasty protein food ingredient in claim 5 comprises the following steps of: a pretreament step wherein one or a mixture of the unbleached fish/shellfish meat, live-stock meat and whale meat are adjusted to a grain size to 0.2 to 5 mm; the alkali solution impregnating step wherein 1 to 19 weight parts of the aqueous alkali solution in 3 to 25% by weight concentration is added to and conducted granulation or kneaded/mixed with 100 weight parts of one or more of the fresh raw meat obtained from the pretreatment step; the additive solution adding step wherein the solution including at least one of additive selected from the group consisting of saccharide, vitamin C preparation, vitamin E preparation, powdered albumen, is added to, and conducted granulation or kneaded/mixed with the fresh raw meat obtained from the alkali solution impregnating step; a freezing step wherein the intermediate processed meat obtained from the additive solution adding step is frozen; thawing and pulverizing steps wherein the intermediate processed meat frozen in the freezing step is thawed and pulverized at frozen state; a pasty meat processing step wherein 3 to 22 weight parts of the aqueous salts solution of 3 to 35% by weight concentration including at least one of salt selected from the group consisting of NaCl, KCl, CaCl₂ and MgCl₂ is added to 100 weight parts of the thawed and pulverized ingredient obtained from the thawing and pulverizing steps and while the protein raw ingredient is granulating in high concentrated salts solution and, the protein in the ingredient is given gelling ability by dissolving the protein in salt; and as required, a water mixing step wherein 1 to 80 weight parts of water including seasoning, binding promoter such as starch, and powdered blood plasma at need in 0.05 to 15% by weight concentration is added to and mixed with 100 weight parts of the pasty meat obtained from the pasty meat processing step.

The method for producing the unbleached pasty protein food ingredient in claim 6 comprises the following steps of: the pretreatment step wherein 5 to 25 weight parts of water is added to 100 weight parts of the protein raw ingredient from the unbleached fish/shellfish or live-stock meat whose foreign substances are difficult to remove, then adjusted to the grain size to 0.2 to 5mm, passed through a colander, and dehydrated as required; the additive solution adding step wherein the solution including at least one of additive selected from the group consisting of saccharide, vitamin C preparation, vitamin E preparation, powdered albumen, is added to, and conducted granulation or kneaded/mixed with one or more of the fresh raw meat obtained from the pretreatement step; a freezing step wherein one or a mixture of the intermediate processed meat obtained from the additive solution adding step is frozen; thawing and pulverizing steps wherein the intermediate processed meat frozen in the freezing step is thawed and pulverized at frozen state; a pasty meat processing step wherein 1 to 19 weight parts of the aqueous alkali solution in 3 to 25% by weight concentration is added to, and conducted granulation or kneaded/mixed with 100 weight parts of the intermediate processed meat obtained from the thawing and pulverizing step, and then 3 to 22 weight parts of the aqueous salts solution in 3 to 35% by weight concentration including at least one of salt selected from the group consisting of NaCl, KCl, CaCl₂ and MgCl₂ is added to 100 weight parts of the intermediate processed meat, under the high concentrated salts solution to give gelling ability by dissolving the protein of the intermediate meat in salt; as required, the water mixing step wherein 1 to 80 weight parts of the water including seasoning, binding promoter such as starch, and powdered blood plasma at need in 0.05 to 15% by weight concentration is added to and mixed with 100 weight parts of the pasty meat obtained from the pasty meat processing step.

The method for producing the unbleached pasty protein food ingredient in claim 7 comprises the steps of: the pretreatment step wherein unbleached small size fishes whose foreign substances are difficult to remove, high fat fishes such as sardines or sauries, or round or dressed fishes in lower freshness, put into a scale-removing machine to remove scales, and heads and internal organs are removed and chopped by a fish meat separator to make protein-based ingredient, and then 1 to 19 weight parts of the aqueous alkali solution of 3 to 25% by weight concentration is added to 100 weight parts of the protein-based ingredient, conducted granulation, adjusted to the grain size to 0.2 to 5 mm, passed through a colander, and dehydrated; the additive solution adding step wherein the solution including at least one of additive selected from the group consisting of saccharide, vitamin C preparation, vitamin E preparation, albumen, is added and or kneaded/mixed to the protein-based ingredient; the freezing step wherein any one or more of the intermediate processed meat obtained from the additive solution adding step is frozen; the thawing and pulverizing steps wherein the intermediate processed meat frozen in the freezing process is thawed and pulverized at frozen state; the pasty processing step wherein 3 to 22 weight parts of the aqueous salts solution in 3 to 35% by weight concentration including at least one of salt selected from the group consisting of NaCl, KCl, CaCl₂ and MgCl₂ is added to 100 weight parts of the intermediate processed meat obtained from the thawing and pulverizing steps, and conducted granulation under the high concentrated solution of salts to give gelling-ability and by dissolving the protein of the intermediate meat in salt; the water mixing step wherein 1 to 80 weight parts of the aqueous solution in 0.05 to 15% by weight concentration including seasoning, binding promoter such as starch, and powdered blood plasma at need is added to and mixed with 100 weight parts of said intermediate processed meat.

The method for producing unbleached pasty protein food ingredient in claim 8 according to any one of claims 1 to 5 wherein alkali in the alkali solution is one alkali or a mixture of two or more selected from the group consisting of NaHCO₃, K₂CO₃, NaOH, KOH, Ca (OH)₂, NaHCO₃, K₂CO₃, Ca (HCO₃)₂, NH₄HCO₃, monosodium phosphate, disodium phosphate, trisodium phosphate, sodium pyrophosphate, sodium phosphate, potassium metaphosphate, sodium metaphosphate, sodium polyphosphate, potassium polyphosphate, dipotassium phosphate, tripotassium phosphate.

A protein-based food ingredient in claim 9 is made by a method for producing unbleached pasty protein-based ingredient of any one of claims 1 to 8.

A protein-based food in claim 10 is that the unbleached protein-based ingredient of claim 9 is mixed with at least one of additive selected from the group consisting of seasoning, binding promoter, emulsifier, functioning agent,adhesive promoter, preservative, vegetable fiber and animal or vegetable oils and fats and/or other food ingredients.

A protein-based food in claim 11 is characterized by a shaped product which is made from the unbleached protein-based ingredient according to claim 9 into either board or stick shape, and other food ingredient layered and rolled by the shaped product.

The protein-based food in claim 12 is wherein said protein-based food ingredient of claim 9 is mixed and forming-processed with other food ingredients.

Furthermore, in the water mixing step in claims 1 to 5 can add the kneading step in which the protein raw ingredient obtained from the water mixing step is kneaded using a grinding machine, silent cutter, high-speed mixer or the like. By kneading the ingredient in the kneading step, it will be possible to distribute the additives uniformly into tissue thus produce a protein-based food ingredient with a higher gelling ability.

For unbleached fish/shellfish, regardless of fish size, all salt water or fresh water products, can be used as protein raw ingredient. For example, in the sea-water fish and shellfish group: there are white meat fishes such as walleye pollocks, Atka mackerels, silver salmons and sea breams, dark fleshed fishes such as tunas and spearfishes, blue-skinned fishes such as sardines, mackerels, saurels and sauries, shellfishes such as shrimps, crabs, scallops, shucked shellfishes oysters, mollusks such as eels, sea eels, cutlass-fishes, octopus, squids, krills such as South Pole krills, and mysids, whales, dolphins, fur seals and seals are also utilized. In the group of fresh water fishes and shellfishes, carps, crucian carps, snailfishes, shrimps, crabs, etc. can be used. The fishes may be used in fresh form immediately after being caught, refrigerated, frozen or semi-frozen.

Following forms of fishes and shellfishes raw ingredient: fillet, chopped meat, shucked shellfish, round, semi-dressed, dressed, pan dressed, chunk, block, steak, can be used depending on the size and usage, etc. It will now be possible to effectively use large catching fishes such as sardines, etc. krills, a large quantities of egg-removed salmon, lean fishes having little fat and low-usage fishes such as sharks and finally, fish meat in low freshness.

As for live-stock meat, in addition to domestic animals such as beef cattles, pigs, horses, sheeps, poultries, etc., wild animals such as wild boars and rabbits can also be used. The forms of raw ingredient are about the same as those for fishes, although they may vary depending on the size and type of the animals and their usage. In the case of live-stock meat, in addition to fresh meat, tough, poor-tasting meats and meat scrap, etc. also can be used, and their effective use are realized.

When fishes and shellfishes or live-stock meat are refrigerated products, in order to prevent the product from temperature rising, it is preferable to keep the processing space cool by using ice, refrigerant (liquid N₂, dry ice, brine) and the like, whereby, it will be possible to inhibit the activation of proteolytic enzymes, prevent discoloration by the activity of enzymes such as tyrosinase and to inhibit increase of bacteria.

The processing temperature is preferably kept at 20°C or below or more preferably, 13°C or below if the protein raw ingredient is fresh fishes or a refrigerated product. And, in the case of frozen or semi-frozen product, the temperature is preferably kept at 0°C or below. If possible, the entire process is preferably performed 0°C or below. Even the temperature is 0°C or below, free water and the like promotes salt dissolution and gelling ability of protein in the ingredient. With this processing method, it is possible to obtain unbleached ground fish meat having gelling ability by joining fish meat and the low molecular Umami (taste representend by the taste of Kombu) components (extract) together, self-emulsifying and dispersing uniformly.

When the protein raw ingredient is frozen or semi-frozen products or refrigerated raw, fresh fishes, the processing temperature is preferably 5°C or below, or more preferably 0°C or below. The object is to retain emulsifying property and product quality and to prevent coagulation, increase of bacteria and deterioration of the meat. In the case of refrigerated or fresh fishes and live-stock meat and the like, the processing temperature is preferably kept at 20°C or below or more preferably, 13°C or below to retain emulsifying property and product quality, prevent coagulation, increase of various bacteria and deterioration of meat.

The aqueous salts solution includes that of NaCl, KCl, CaCl₂, MgCl₂, etc. the concentration of the solution is preferably 3 to 35% by weight or more preferably 6 to 30% by weight. Any other percentage range is unacceptable since the product will lack in taste and elasticity. In the fishes and shellfishes, small amount of salts may be added, but in the live-stock meat, it would be preferably to use a slightly larger quantity of salts. The object of salts addition is to improve the solubility and binding property of the myofibrillar protein of the live-stock meat and the binding property.

For the added amount of the salts solution to the protein raw ingredient, 3 to 22 weight parts or preferably 6 to 12 weight parts of the aqueous salts solution in 3 to 35% by weight concentration should be preferably added to 100 weight parts of it. It was recognized that drop of solubility of the myofibrillar protein occurs below 6 weight parts and that it becomes markedly below 3 weight parts. On the other hand, the salts exhibit their effect strongly over 12 weight parts, and when the amount exceeds 22%, requirements as a food product are lost. The lower the added amount, the higher the possibility to obtain a food product with light taste in which the flavors of the ingredients are enhanced. The greater the added amount, the higher the possibility to improve the preservability of semi-dried and dried products.

The concentration of the aqeous alkali solution is 3 to 25% by weight, preferably 5 to 20% by weight. The added amount of the solution in 3 to 25% by weight concentration, 1 to 19 weight parts or preferably 3 to 8 weight parts to 100 weight parts of the protein raw ingredient. When the concentration is less than 5% by weight or the added amount is less than 3 weight parts, it is recognized that the pH rising of the protein raw ingredient is low and the gelling ability becomes unstable. This tendency is markedly noticeable in the case of less than 3% by weight concentration or 1 weight parts addition. On the other hand, when the concentration exceeds 20% by weight or the added amount exceeds 8 weight parts, there is a tendency for the pH to rise too high and for the myofibrillar protein to dissolve excessively, thus lowering the binding property of the meat and making it difficult to be processed in the later step. This tendency is markedly noticeable when the concentration exceeds 25% by weight or the added amount exceeds 19 weight parts. The pH for processing the protein raw ingredient should be 5 to 10, or preferably 6.5 to 8. When the pH drops below 6.5, there is a tendency for elasticity to lower and below 5, coagulation becomes difficult. On the other hand, when the pH exceeds 8, for some protein-based ingredients, it is recognized that there is a tendency for sudden coagulation to occur. The higher the pH, the higher the possibility of the ingredients to coagulate rapidly and the protein-based food ingredients to crumble, thus making it difficult to process them.

As the alkali, one or a mixture of the following alkalis is used: NaHCO₃, K₂CO₃, NaOH, KOH, Ca(OH)₂, NaHCO₃, K₂CO₃, Ca(HCO₃)_{2,} NH₄HCO₃, monosodium phosphate, disodium phosphate, trisodium phosphate, sodium pyrophosphate, sodium polyphosphate, potassium pyrophosphate, sodium hexametaphosphate, potassium metaphosphate, sodium metaphosphate, sodium polyphosphate, potassium polyphospate, dipotassium phosphate, tripotassium phosphate. NaHCO₃ and KHCO₃ are particularly preferable since the pH of the solution containing them is easily adjustable although the solubility is somewhat poor.

The salt solution, alkali solution and additive solution or their mixture are added to the protein raw ingredient through spraying, injection, etc.

Granulation is performed by using a homogenizer, MCB (Iwai Kikai Kogyo (Machinery)Co.), silent cutter, ball cutter, high-speed cutter, mixer, meat grinder, grinding machine, etc.

In the kneading/mixing step, water mixing step, and pasty meat processing step, kneading and mixing are performed by using a kneader-mixer, vibrator or massager.

For the added amount of water in the water mixing step, 1 to 80 weight parts or preferably 10 to 40 weight parts of water should be added to 100 weight parts of the protein raw ingredient. When the added water is below 10 weight parts, it is recognized that viscosity tends to increase, particularly in live-stock meat with lower water content. This tendency becomes markedly when the added water is below 1 weight parts. And when added water exceeds 40 weight parts it is recognized that, there is a tendency for fishes having high water content to become slurry and difficult to shape. This tendency becomes markedly when the added water exceeds 80 weight parts. Thus, both situations are not desired.

The water mixing step should be performed at a temperature of 5 °C or below or preferably 0°C or below. This temperature range prevents the processed protein-based ingredient from coagulating and prolongs the forming time, any processing time can be secured; furthermore, product quality can be retained and increase of bacteria can be prevented.

The grain size of the meat in the pretreatment step should be adjusted to 0.2 to 5mm or preferably 0.4 to 2mm. When it is smaller than 0.4mm, it is recognized that the protein in the later step is prone to thermal denaturation. This tendency is markedly noticeable when the size is less than 0.2mm. When it is larger than 2mm, it is recognized that there is a tendency for foreign substances to be mixed in and to leave a rough feeling in the mouth. This tendency becomes markedly when the size is lager than 5mm.

For the saccharide, xylitol, sorbitol, glucose, oligosaccharide, galactose, fructose, lactose, cane singer, maltose and the like are used. In order to moderate sweetness and to produce luster, it is desired to use a mixture of two or more of saccharide. The addition of the saccharide also prevents freezing denaturation. The added amount of the saccharide should be 1 to 13% by weight or preferably 4 to 10% by weight to the protein raw ingredient. Beyond the limit of this range it is difficult to achieve aforementioned effect.

Furthermore, it is possible to add glycerol and propylene glycol instead of saccharide or add them to the ingredient together with the saccharide. They serve to luster to the protein-based food product and in particular, in the case of products, it will be possible to give a caramel-like luster that evokes a high-grade feeling.

The object of vitamin C and E preparations addition is fortification and prevention of oxidation. Vitamin C preparation or ascorbic acid is primarily used to act on free water to provide an antioxidation ability and Vitamin E preparation which are α -, β -, γ - tocopherol or α -, β - , γ -, δ - tocotrienol act on the fat component of the protein-raw ingredient to retain antioxidation ability. For the added amount to 100 weight parts of the protein-raw ingredient, 6 to 300mg or preferably 20 to 150mg of vitamin C preparation is used and 1 to 100mg or preferably 5 to 80mg of vitamin E preparation is used. For some types of the protein-raw ingredients, when the amount of vitamin C preparation drops below 20mg, the meat color has a tendency to deteriorate, while the amount exceeds 150mg, depending on the type and freshness of the meat, there is a tendency not to be able to recognize effect in the color development of the meat and the antioxidation. In particular, when the amount drops below 6mg or exceeds 300mg, the tendency becomes markedly, so both situations are not desired.

When the amount of vitamin E preparation drops below 5mg, there is a tendency for the effects in color-formation and anti-oxidation to decrease. And when the amount exceeds 80mg, there is a tendency not to be able to attain higher effects with the drug increasing the effect of color development and antioxidation. In particular, when the amount drops below 1mg or exceeds 100mg, the tendency becomes markedly, so both are not desired situations. Vitamin C and E preparations can be used individually or together as a mixture.

Powdered albumen improves emulsifying property, water retention and binding property and its added amount is preferably below 5 weight parts to 100 weight parts of the protein raw material.

Antioxidants prevent the ingredient from browning and the same on the market are used.

To prevent denaturation at frozen state of the protein, freezing of the intermediate processed product is performed by kneading/mixing minced meat, and/or chopped meat which unbleached animal protein with aqueous additive solution containing alkali, saccharide and powdered albumen, are conducted granulation to uniform grain size and quick-freezing. By thawing, it is important to prevent temperature rising by powdering at frozen state and thawing rapidly, because the proteolytic enzyme in the meat may autolyze actively with temperature rising.

In the foaming step, a foaming agent (for example, SunSoft SP-A of Taiyo Kagaku Kogyo Co., Okaru-no-moto of Aiko Yakuhin Co.), yam and such are used, and are made into various foam-forms by using a foaming machine (for example, type BM250, BM150, etc. of Yanagiya Co.).

Cell membrane and sarcolemma in the protein raw ingredient are dissolved in the high concentration solutions of alkali and NaCl, and eluted Umami(taste) at cellular level.

A composite-seasoning effect can also be achieved by using in addition to the aforementioned Umami, extracts from seaweeds including Kombu(sea tangle) and Shiitake mushrooms lack in animal protein and also extracts of animal-based peptides and the like. This kind of processing rectifies the disadvantage of not having been able to fully utilize the original Umami(taste) of animal protein in the existing water-bleached ground-form meat, and to produce a wide range of tastes.

The binding promoters include gelling promoters, starch, etc. For improving elasticity, small quantities of basic amino acids such as lysine, arginine, ornithine may be added. 0.1 to 25 weight parts of binding promoters is added or injected to 100 weight parts of the protein raw ingredient as a solution or a card-like material.

For some ingredients, they can be added directly in pulverized form. They can either be added together with the salts or alkali solutions or separately.

For 1 to 10 weight parts or preferably 5 to 8 weight parts of gelling promoter should be added to 1 weight part of the salts. The smaller the amount of the gelling promoter, the higher the possibility obtaining soft product with salty taste. When the added amount of the additive is large, resistance to the teeth is increased and the shape forming ability is improved.

Gelling promoters include animal albumin, vegetable albumin, flour, gluten, active gluten, soybean protein, albumen and whole eggs, gelatin, carrageenan, pectin, agar, glucomannan, etc. The animal album ins include egg albumin, serum albumin, lactic albumin, etc. The vegetable albumins include starch and processed starch saccharide. The starches include potato starch, corn starch, wheat starch, sweet potato starch and processed starch made from then. In addition, wheat, barley, leucosin of rye, peas, legumelin of soybeans and the like are used.

When the adhesive property and the formability of the ground meat are poor, by adding the gelling promoter the binding property of the protein raw ingredient is improved and the use range of it are expanded markedly.

In case of the protein-based food ingredient which has a somewhat poor gelling ability, it will be possible for pasty meat to form into desired shape by selecting the added amount to adapt to the property of final product.

As powdered blood plasma, Profine FG (Taiyo Kagaku Co.) or the like are used. By adding it, it will be possible to inhibit the activities of the proteinase.

Subsidiary ingredients include emulsifiers, binding promoters, vegetable fibers, functioning agents, animal or vegetable oils and fats, pH adjustment agent or the like. The emulsifiers include whole eggs, yolk, albumen, lecithin, fatty acid esters or sugar ester.

Binding promoters include casein, soybean protein powder, lacto-protein, collagen or the like.

To 100 weight parts of the protein raw ingredient, 0.001 to 20 weight parts, preferably 0.01 to 10 weight parts or more preferably 1 to 8 weight parts of the binding promoter are added. When the added amount is small, the ingredient with soft feel and extensibility is obtained. On the other hand, when the added amount is large, the ingredient with elasticity and nice resistance to the teeth is obtained. It is preferable to use albumen, whole eggs in raw or dried form. If the water -adding step is to be included in the processing step, it is preferable to use whole raw eggs or the like, but when water content in the ingredient is lowered as possible, it is preferable to use dried whole eggs, yolk or albumen.

Dietary fibers include powdered fiber from soybean or the like, powdered cellulose, fibrous polysaccharide common in plants soybean protein tissue, in either granular or thread-form, non-soluble dietary fiber such as organized starch, guagum, non-soluble fiber such as polydextrase and the like and chitin, and also spun thread-like processed product (for example, Seagress from Nihon Suisan Co.) which primarily consists of animal protein and which has been shaped through heating, etc.

The addition of the dietary fiber improves the color tone of the processed pasty product and makes it possible to obtain a white protein -based food product. Furthermore, the water retention ability of the dietary fiber serves to preserve the water content in the meat containing the Umami(taste); as a result, it will be possible to prevent the separation of water from the protein-raw ingredient.

As functioning agents include health foods or special foods for medical purposes which contain nutrients with the various characteristics of animal protein, and functioning substances such as various vitamins, herb medicine extracts, chitosan and the like suiting for the applications.

Animal oils and fats include pork fat, beef fat, sheep fat and shortening oil, margarine and the like, while vegetable oils include soybean oil, sesame oil, rape seed oil, cotton seed oil, sunflower oil, corn oil, olive oil, palm oil, peanut oil and the like.

Seasonings are used to improve the flavor and taste and they include dairy products such as milk, raw cream, butter and cheese; mirin(sweet sake), cooking sake, amino acids, various spices, various extracts, various salts, chemical seasonings such as inosinic acid salt, glutamic acid salt and the like; natural seasonings such as Shiitake mushrooms, Kombu(sea tangle), Kastsuobushi(dried bonito); condensed fish extracts such as peptide; compound seasonings; sweeteners such as sorbitol; preservatives such as sorbic acid. As required, an appropriate amount of pH lowering agent and the like, can be used in conformity with the kind of the final processed product. Through these additions of various additives it will be possible to produce a new type of food product with a savory taste related to distinctive flavors of the protein raw ingredient of crabs or shrimps.

Through the method described above, it is possible to produce a protein-based food ingredient which is highly nutritive and has a high content of extracts or low molecular Umami(taste) components, functional components, vitamins, trace elements and the like, by granulating fish meats and fresh live-stock meats, low-usage protein raw ingredients, scrap meat and various tough protein raw ingredients difficult to use in foods with salts such as NaCl and alkalis. Although the findings could not be proven theoretically, electro-microscope photographs revealed that by using small quantities of highly-concentrated salts solution, it was possible to carry out salt dissolution efficiently and by using small quantities of highly-concentrated alkali solution, it was possible to emulsify the fatty component. These solutions and the low molecular protein, minerals contained in the ingredient together serve to enhance the gelling ability, thus make it possible to obtain the protain-based food ingredient with gelling ability. Since the ingredient has gelling ability, it has outstanding water retention property and at frozen state, the possibility of chances of denaturation from freezing is small and during thawing, prevent dripping formation and Umami(taste) is not lost.

Since gelling ability is very high, it will be possible to prevent dripping during thawing and the entire protein raw ingredient can be used to produce the food products. Thus, available components such as low molecular Umami(taste) containing-nutrients, DHA, EPA and the like can be used effectively.

Up to now, it was not possible to give gelling ability to unbleached, protein raw ingredient, but through granulation using highly concentrated alkali or salt solutions, it has become possible to elute actomyosin and even for weak gelling ability ingredients to form a network structure through a synergetical bridging effect by adding promoters such as albumen to promote and strengthen gelling ability.

The intermediate processing product was made by adding a given amount of saccharide, vitamins and antioxidants to the pretreated ingredients, and kneading/mixing the mixture. Thus, even when it was preserved in the frozen state at a temperature of -25°C for 60 days, it could still be granulated by grinding, etc. to be made into a protein raw product with desired gelling ability. It has also become possible to improve the product quality of the intermediate processed product by adding highly-concentrated alkali solution to the protein-based ingredient.

Since it has become possible to prepare the intermediate processed product, the desired processed food product can be obtained only by thawing the intermediate product in the frozen state and kneading/mixing it with a given amount of the aqueous solution containing highly-concentrated salt solution, seasonings, starches, and functioning agents. If the intermediate processed product was produced without alkali solution, it will be required to add the alkali solution impregnating step.

Since the unbleached ingredient is used, particularly in fish meat it is possible to effectively use the low molecular Umami(taste) containing-nutrients and to obtain the product that contains nutritive components such as EPA, DHA and the like and is more excellent than that with the bleached type. In the product with the unbleachsd ingredient, it is possible to increase product yield markedly, and to dilute it with water since it has high salt-dissolution and gelling abilities.

In general, when the unblend fresh meat of fishes and shellfishes is used, the color of the product darkens and deteriorates, but by adding an appropriate amount of alkalis, vitamins and the like, it will be possible to markedly resolve these problems, although the reasons could not be theoretically proven. This process also caused the same marked effects for the live-stock meat.

Because the high-concentration solution processing method which uses highly-concentrated salts or alkali solution is adopted, the vitamins and other agents penetrate into the meats in their cellular level by the relaxation action for skeletal muscles and cell membrane and the osmotic pressure of the solutions. This makes it possible to attain an exceptionally high antioxidation effect, prevent discoloration of the meat and regenerate discolored meat, etc. and to affect salt dissolution, emulsifying and gelling abilities to the cellular level. Furthermore, because the processing agent with antioxidation ability works its way into the cellular level, enzyme activities are inhibited and autolysis is markedly delayed, the resulting product can keep its quality for longer period. Through the aforementioned high-concentration processing method, the cell membrane and skeletal muscles of the protein raw ingredient which contains oil and fat, independent of the type of fishes-and-shelldishes and live-stocks are quickly dissolved and emulsified in high concentration salt. As a result, by use of various types of granulating machines, it has become possible to grind the meat in 1/2 to 1/20 of time for the time of the conventional method. In this method, it is possible to utilize low molecular Umami(taste) containing-nutrients and produce a food ingredient from which the fish and meat odors have been fully removed and which has outstanding processability because the ingredient takes up low molecular components, has high gelling ability and emulsifying action, has network structure by synergetical bridging action, and has high gell-strength.

By varying gelling degree, it is possible to obtain gelling food products freely ranging from yogurt-form to soft-form such as Tempura, etc. and to hard gel-form such as jerky.

In this invention, the protein-based food ingredient containing binding promoter, through synergetical effects with the processing method, has elasticity, extension, water retention and soft taste lacking in conventional same kind of the ingredients, and can be used as a pasty processing food ingredient for various uses.

The viscosity of the protein-based ingredient can be adjusted freely by diluting it with water, so it can be applied to a wide-range of processing method; in combination with other food ingredients, by considering calorie and others, it will be possible to easily obtain suitable nutritive food products.

### BRIEF EXPLANATION OF THE DRAWINGS

Figure 1 is a process diagram showing the state in a folding test.

Figure 2a is a diagram showing the results of the folding test and a quality-feeling test for deep-fried products in embodiments 1 to 5.

Figure 2b is a diagram showing the results of the folding and quality-feeling test for boiled products in embodiments 1 to 5.

Figure 3a is a diagram showing the results of the same tests for deep-fried products in embodiments 6 to 10.

Figure 3b is a diagram showing the results of the same tests for boiled products in embodiments 6 to 10.

Figure 4a is a diagram showing the results of the same tests for deep-fried products in embodiments 11 and 12.

Figure 4b is a diagram showing the results of the same tests for, boiled products in embodiments 11 to 12.

Figure 5a is a diagram showing the results of the same tests for deep-fried products in embodiments 13 to 18.

Figure 5b is a diagram showing the results of the same tests for boiled products in embodiments 13 to 18.

Figure 6a is a diagram showing the results of the same tests for deep-fried products in comparative examples 1 to 4.

Figure 6b is a diagram showing the results of the same tests for boiled products in comparative examples 1 to 4.

Figure 7a is a diagram showing the results of the same tests for deep-fried products in comparative examples 5 to 8.

Figure 7b is a diagram showing the results of the same tests for boiled products in comparative examples 5 to 8.

Figure 8 is a diagram showing the results of the same tests for deep-fried products in comparative examples 9 and 10.

Figure 9a is a diagram showing the results of the same tests for deep-fried products in embodiments 19 to 23.

Figure 9b is a diagram showing the results of the same tests for boiled products in embodiments 19 to 23.

Figure 10a is a diagram showing the results of the same tests for deep-fried products in embodiments 24 to 26.

Figure 10b is a diagram showing the results of the same tests for boiled products in embodiments 24 to 26.

Figure 11 is a diagram showing the results of the same tests for deep-fried products in comparative example 11.

Figure 12a is a diagram showing the results of the same tests for deep-fried products in embodiment 33.

Figure 12b is a diagram showing the results of the same tests for boiled products in embodiment 33.

Figure 13 is a diagram showing the result of the quality-feeling test in embodiment 34.

Figure 14 is a diagram showing the result of breaking-strength of the final processed products in embodiment 37.

### BEST MODE FOR CARRYING OUT INVENTION

The invention will be more clearly understood with reference to the following embodiments.

### (Embodiments 1 to 5)

Preparation of protein raw ingredient; 50 sets of 300g sardines were prepared (as embodiment 1). They were pretreated by removing heads, scales and internal organs and frozen at -20°C . As the raw ingredient, shucked krill (as embodiment 2), whale meat (as embodiment 3), egg-removed salmon (as embodiment 4) and beef-meat scrap (as embodiment 5) were prepared in the same way as in embodiment 1.

Aqueous salt solution: 4g of NaCl dissolved in 25cc of water at room temperature and was poured into each of 50 flasks.

Aqueous alkali solution: 3g of NaHCO₃ dissolved in 25cc of water at room temperature and was poured into each of 50 flasks.

Water: 50cc of water was poured into each of the 50 flasks.

Seasoning: 15g of sugar and 3g of chemical seasoning were put into each of 50 watch glasses.

The protein-based food ingredient was obtained by using the above mentioned raw ingredient and additives and the following processing method:

Each of the protein-based ingredient which was pulverized in advance was granulated rapidly by using a high-speed cutter. At the same time, the aqueous salt solution and seasoning were added, followed by the aqueous alkali solution. At 2.5 minutes after the beginning of granulation, 50cc water was added. Quick-granulation lasted for 30 seconds. As a result, protein-based food ingredient in pasty meat was obtained. When whale meat and beef meat scrap were used, a viscous, ball -form ingredient was obtained. The diameter of the meat grain of the protein-based food ingredient was measured by using an ordinary method and the average diameter was found to be 0.7 to 0.05mm. The temperature of the ground meat at finish was -4.5 to -3°C and the pH of the pasty meat was 7.3 to 7.6. For resulting protein-based food ingredient, gel-strength, elasticity (softness, etc.), tensile strength, odor and quality -feeling were tested.

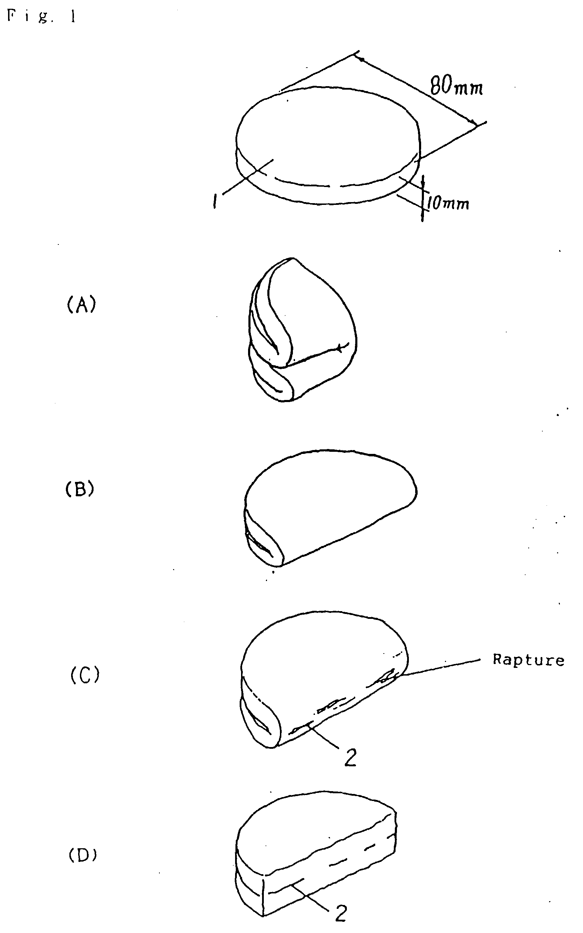

Gel-strength test: A forming product was obtained by evenly pouring the protein-based food ingredient in pasty meat into a mold of 10mm thickness and 80mm diameter. From this forming product, following two test products were obtained. The first was deep-fried on both surfaces in the oil bath of 160°C for 2.5 minutes. The second was obtained placing a wrapped product after coagulation step into the hot water bath of 85°C, followed by boiling for 20 minutes. These test samples were used in the folding test shown on Figure 1.

Figure 1, is a process-diagram which shows the state of the folding test.

The folding test was performed by the following method described in " Fish Meat Pasty Products: New Edition; page 399 " (1987 edition) published by Koseisha Koseikaku Co. Each test sample was folded and then rated by the following 4 ranks.
A: does not crack even when folded in four
B: does not crack even when folded double
C: about half of the diameter cracks when folded double
D: cracks completely when folded double

In the folding test, five samples were chosen from the test-samples to determine the average value. The results are shown on Table 1. For evaluation of the strength of the folding-area of the sample under severe conditions, the test sample was made 10mm thick.

For the sensory test, the aforementioned test samples were cut into 2cm dice and given to 10 panelists who rated the color, texture, flavor, Umami(taste) by 5 ranks.

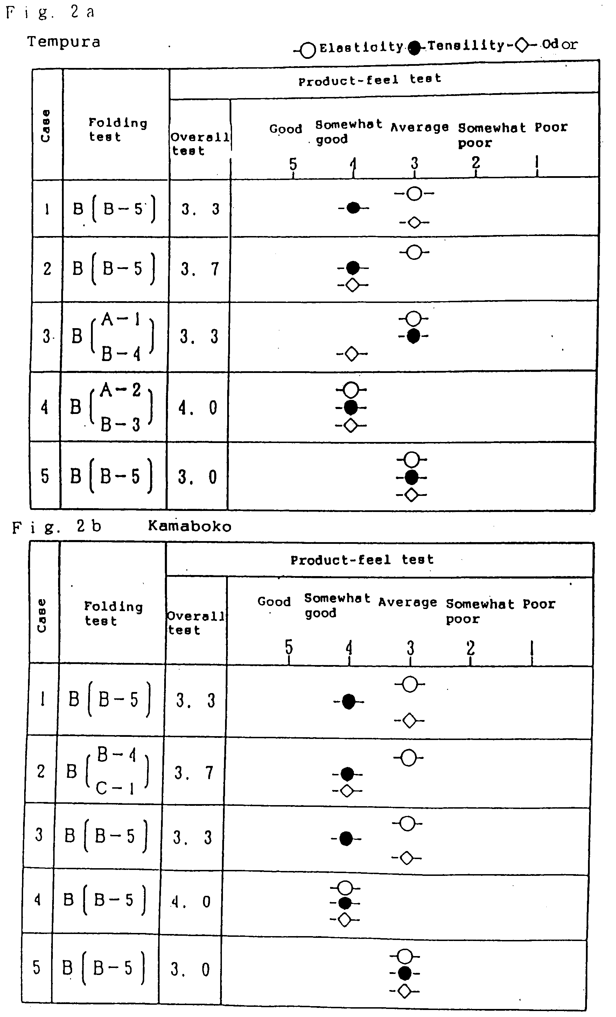

The standard raw ingredient was ground fish meat obtained from the fresh sardines whose meat was bleached by water and granulated. Tempura(deep-fried Kamaboko) and Kamaboko(boiled fish paste) obtained from the standard ingredient was used as standard samples. An average value of the 5-rank ratings was determined; rating of the 5th rank means excellent, the 4th means good, while the third means they are no different from ordinary Tempura and Kamaboko, the second means slightly poor and the first means poor. The results are shown in Figures 2a and 2b.

Figure 2a shows the results of the folding and quality-feeling tests for deep-fried products(Tempura) while Figure 2b shows the results of the same tests for boiled products(Kamaboko). In the diagram the numbers in parentheses in the folding test represent the number for each A-D rating while the alphabets at left side of parentheses represent the overall ratings.

As apparent from Table 1, Figures 2a and 2b, the ratings were exceptionally high for both deep-fried products and boiled products. Furthermore, It was found that Tempura and Kamaboko from whale meat or beef are superior in Umami(taste) and texture, and are in the same degree in elasticity and tensile strength comparing with those of conventional bleaching method. It was also found that when vegetables such as burdock were added to the protein-based food ingredient in pasty meat obtained in the embodiments, a new kind of burdock Tempura or special Kamaboko are obtained which are superior in Umami(taste), texture and highly nutritious.

### (Embodiments 6 to 10)

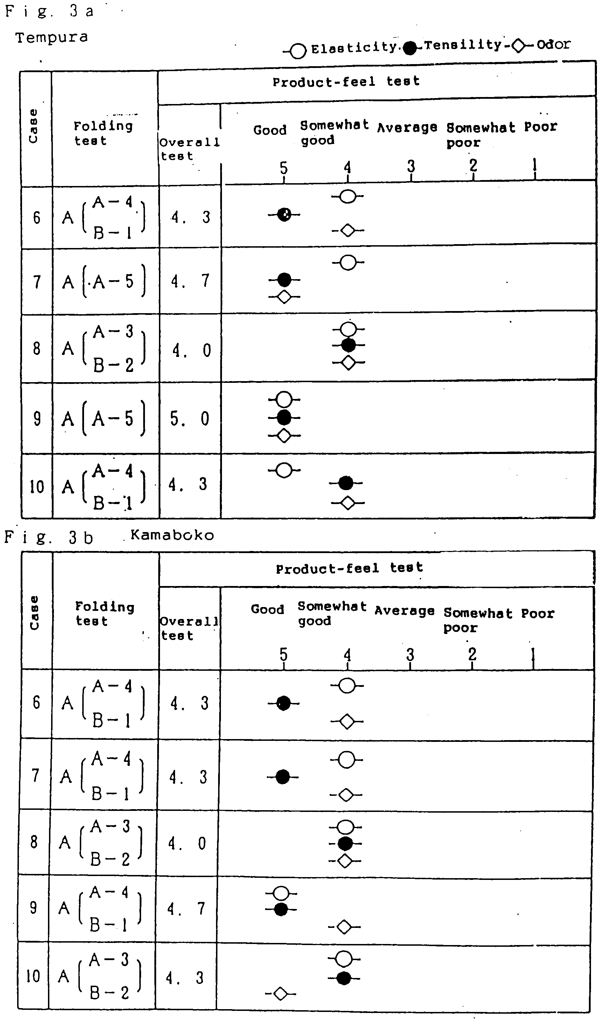

The same raw ingredient as in embodiments 1 to 5 was prepared. The same procedures as in embodiments 1 to 5 were used to obtain the protein-based food ingredient except that the aqueous salts solution and binding promoter were added at the same time. The average grain-size was 0.7 to 0.05mm. The temperature of the ground meat at finish was -3.6 to -2.2°C and the pH of the pasty meat was 7.3 to 7.6. For binding promoter, in addition to potato starch, 4g of dried albumen, in embodiments 1 to 4, 5g of raw albumen, in embodiment 5, were added (total 18g). 50 beakers containing these binding promoters were prepared. For the protein-based food ingredient obtained in the aforementioned production method, the gel-strength, quality-feeling and sensory tests were performed in the same way as in embodiments 1 to 5. Those results are shown on Table 2, Figures 3a and 3b.

Figure 3a shows the results of the folding and quality-feeling tests for deep-fried products. Figure 3b shows the results of the same tests for boiled products.

As apparent from Table 2, Figures 3a and 3b, only the addition of potato starch and albumen was enough to increase the luster and shine of the products to a higher level than those of existing Tempura and Kamaboko and to also improve the taste. Moreover, it was found that elasticity and tensile strength also were improved and it became possible to markedly minimize the odor of the beef meat and that the products have possibility being used as western-food ingredients. For example, the whale, egg-removed salmon, and beef meat can be used as western-food ingredients, directly as hors d'oeuvres or cooked with other food ingredients.

### (Embodiments 11 to 12)

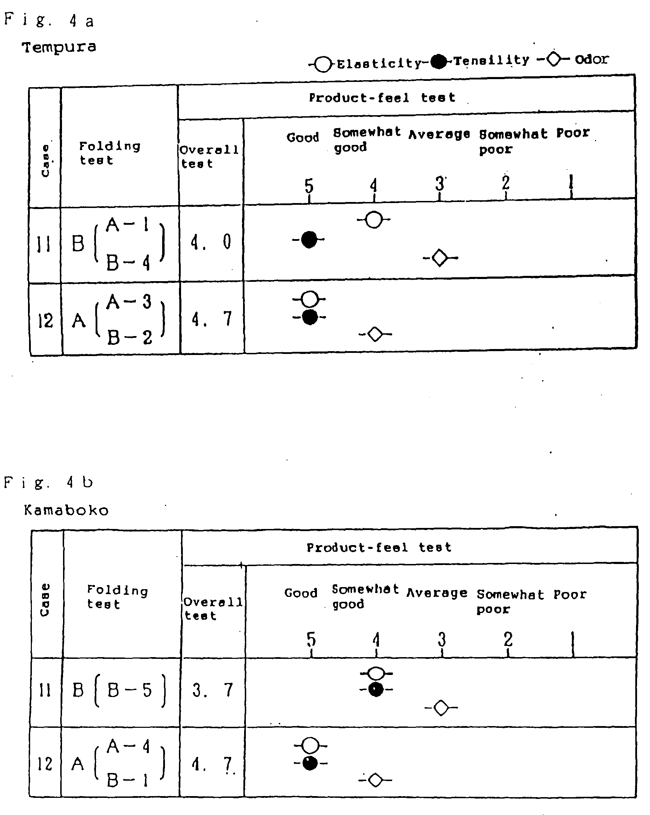

The protein-based food ingredient was obtained from the protein-based raw ingredient: the blended product of each 150g of sardines and scrap beef meat frozen at about -10 °C, in the same way as in embodiment 1 (embodiment 11). Another protein-based food ingredient was obtainted by adding the aqueous salts solution and the binding promoter used in embodiment 6 to the protein-based food ingredient for embodiment 11 (embodiment 12). The gel-strength, quality-feeling and sensory tests were performed on these test-samples. Results are shown on Table 3 and Figures 4a and 4b.

Figure 4a shows the results of the folding and quality-feeling tests for deep-fried products while Figure 4b shows the results of the same tests for boiled products.

As apparent from Table 3, Figures 4a and 4b, it was found that the Tempura and Kamaboko obtained in these embodiments are superior in elasticity and tensile strength in comparison with those in conventional method. And also it was found that it is possible to markedly minimize the odor of the product by adding only the binding promoter.

### (Embodiments 13 to 18)

Preparation of the protein raw ingredient: 50 sets of 300g sardine (embodiment 13), squid (embodiment 14) and cutlass-fish (embodiment 15) which were freshly caught and whose heads and internal organs were removed, and refrigerated saurel (embodiment 16) whose heads and internal organs were removed, and scallops (embodiment 17) were prepared. In addition, 50 sets of blended products of each 150g of the frozen sardines in embodiment 13 and horse meat blocks were prepared (as embodiment 18). The aqueous salts and alkali solutions, water and seasoning were prepared in the same way as in embodiment 1.

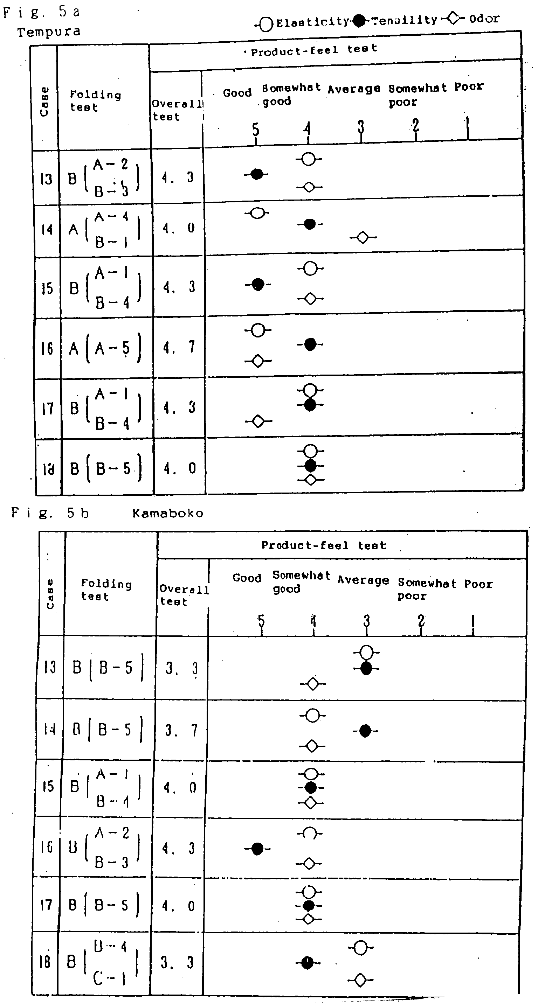

Then, using the above raw ingredient, under the same conditions as in embodiment 1, with a speed cutter, the ingredient was granulated rapidly to obtain the protein-based food ingredient. Test samples were obtained in the same way as in embodiment 1. For these samples, the gel-strength, quality-feeling and sensory tests were performed. The average grain size was 0.66 to 0.09mm. The temperature of the ground meat at finish was 8.6 to 12°C while the pH of the pasty meat was about 7.5. The results are shown on Table 4 and Figures 5a and 5b.

Figure 5a shows the results of the folding and quality-feeling tests for deep-fried products while Figure 5b shows the results of the same tests for boiled products.

As apparent from Table 4, Figures 5a and 5b, the results show that it is possible to improve markedly the elastic and tensile strength by using these protein raw ingredients which were difficult to use until now, and the resulting foods products are outstanding in sense of taste, Umami(taste) and texture.

### (Comparative examples 1 to 4)

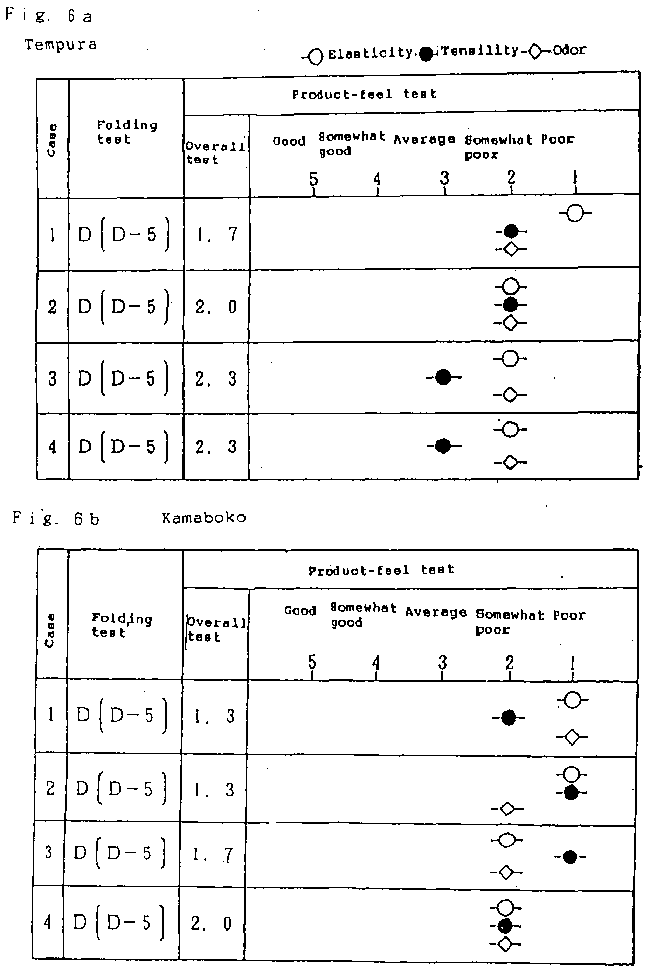

The protein raw ingredient in embodiments 1, 3, 5 and 11 (each corresponds to comparative examples 1-4) was used. The protein-based food ingredient was obtained under the same conditions as in embodiment 1 except that the aqueous salts and alkalis solutions were not added. For the test samples obtained from these ingredients, the gel-strength, quality-feeling and sensory tests were performed. The average grain size of the meat grain was 0.73 to 0.02mm, the temperature of the ground meat at finish was -4.5 to -3°C and the pH was about 7.5. The results are shown on Table 5, Figures 6a and 6b.

Figure 6a shows the results of the folding and quality-feeling tests for deep-fried products while Figure 6b shows the results of the sensory test for boiled products.

### (Comparative examples 5 to 8)

The protein-based ingredient was obtained in the same way as in embodiment 1 except that added amount of NaCl (as aqueous salt solution) to 100 weight parts of the protein raw ingredient is 0.2 weight parts (comparative example 5) and 15 weight parts (comparative example 6). The average size of meat grains was 0.7 to 0.05mm. The temperature of the ground meat at finish was about -3°C and the pH was 7.5.

Then, the protein-based ingredient was obtained in the same way as in embodiment 1 except that added amount of the aqueous alkali solution to 100 weight parts of the protein raw ingredient is 0.05 weight parts (comparative example 7) and 8 weight parts (comparative example 8).

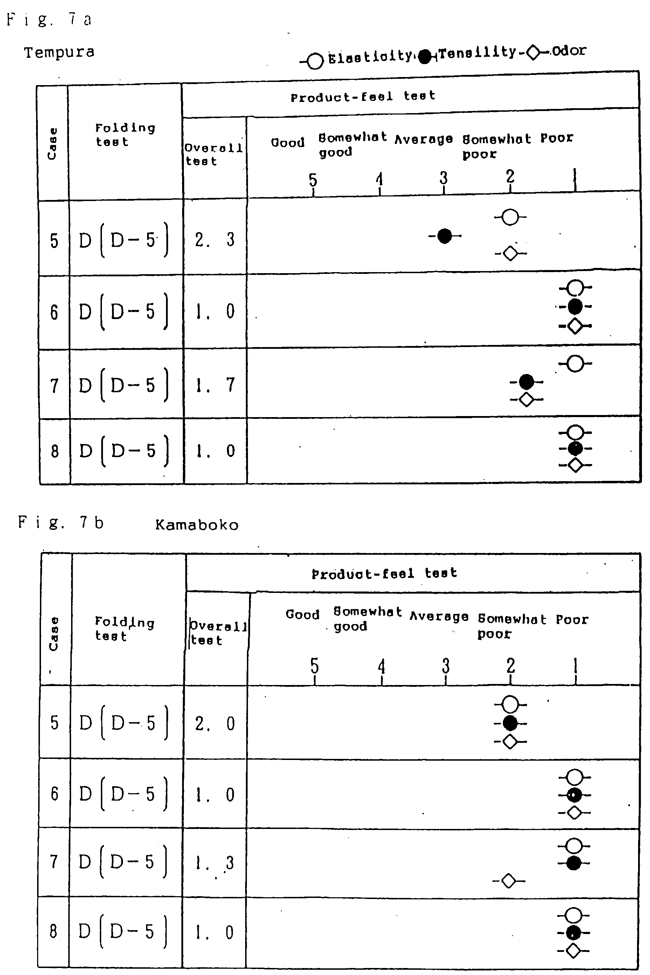

The temperature of the ground meat at finish was about -3°C for both samples while the pH was 5.8 in comparative example 7 and was 8 in comparative example 8. For resulting samples the gel-strength, quality-feeling and sensory tests were performed. The results are shown on Table 6, Figures 7a and 7b.

Figure 7a shows the results of the folding and quality-feeling tests for deep-fried products while Figure 7b shows the results of the same tests for boiled products.

As apparent from Tables 1 to 4, the protein-based food igredients in this invention give water-unbleached protein-based food products that are flexible and elastic because Tempura-and Kamaboko-forming samples obtained from above ingredient did not crack when folded double or in four.

For the ground meat of each sample, just after being ground, was quickly-frozen and for the frozen products, the thawing test was performed on the products after one month, and freezing denaturation such as alteration to sponge-form was not recognized.

Results of the sensory test showed that, because NaHCO₃ as alkali was used at low-temperature, various kinds of tastes were all more outstanding than those for the bleached ground products. The resulting new products become more times of chewing, sore tasteful of free of fish and live-stock odor. And the ingredient in this invention has a wide range usage, for example, could be used for tasty western style Chinese dishes and for Japanese dishes.

On the other hand, in the comparative examples of the protein-based food ingredient of fishes and shellfishes, when heated the protein -based food ingredient from the water-unbleached fish meat and live-stock meat and whale meat ingredient, a unique result characteristic of these cases is obtained. It is therefore estimated from the results that low molecular components inhibit the salt dissolution effect which is responsible for dissolving high-molecular protein-based fiber and that the rough grains do not exert pasty meat effect which forms a network structure. It was also recognized that while the product was being heated, it reverted to the non-heated state, thus destroying the gelling ability. Up to now, this problem was dealt with through quick-heating or the use of powdered blood plasma(Taiyo Kagaku Co.) if necessary, but in this embodiment in the present invention, the above result was achieved without relying on them. That is, the ingredient was not put through the coagulation step or any particular quick-heating step and the above-mentioned results were obtained by classifying raw ingredient, using appropriate processing method for each of them. The protein-based food ingredient in live-stock meat was able to gain gelling ability without going through the coagulating step.

### (Comparative examples 9 to 10)

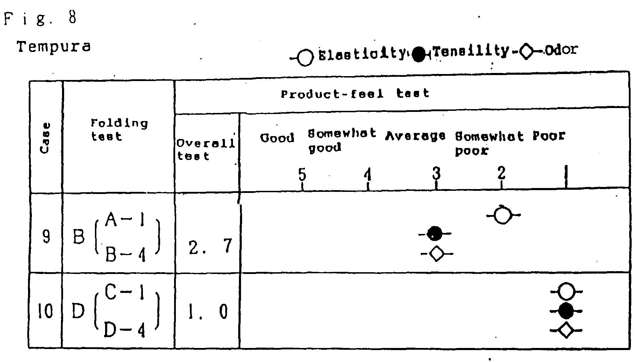

The protein-based ingredient was obtained in the same way as in embodiment 1 except that added amount of water in the water mixing step to 100 weight parts of the protein raw ingredient is 3 weight parts (comparative example 9) and 90 weight parts (comparative example 10). For these ingredients the gel-strength, quality-feeling and sensory tests were performed. The results are shown on Table 7 and Figure 8.

Figure 8 shows the results of the folding and quality-feeling tests for deep-fried products.

A small amount of water was added to the protein-based food ingredient in comparative example 9. Although the ingredient could be kneaded, for some types of the protein raw ingredients, a hard finish was obtained. For such a hard finish, it was found that there are problems lacking in processability, elasticity, binding property and water retention. On the other hand, because a large amount of water was added to the protein-based food ingredient in comparative example 10, the product became slurry and proved unsuitable for a gelling food product.

### (Embodiments 19 to 23)

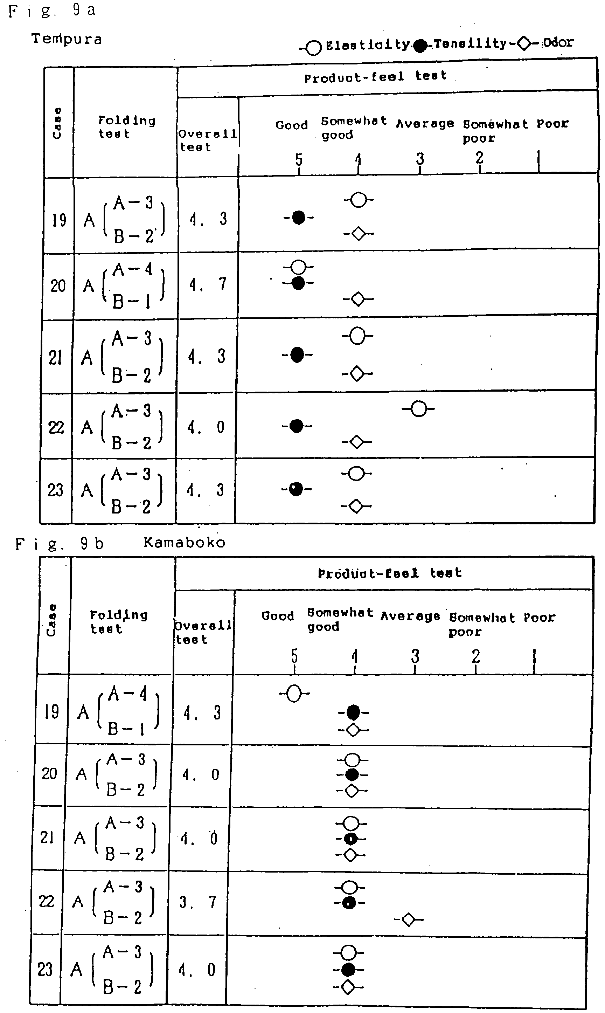

The protein-based ingredient was obtained in the same way as in embodiment 1 except that as the binding promoter, instead of dried albumen, same amount of soybean protein and lactic albumin (embodiment 19), soybean protein (embodiment 20), lactic albumin (embodiment 21) and instead of potato starch, same amount of wheat starch (embodiment 22), corn starch and sweet potato starch were added. For these ingredients the gel-strength, quality-feeling and sensory tests were then performed. The results are shown on Table 8 and Figures 9a and 9b.

Figure 9a shows the results of the folding and quality-feeling tests for deep-fried products while Figure 9b shows the results of the same tests for boiled products.

The results of gel-strength, elastic and pulling properties, luster, flexibility and the results of the sensory test were all excellent.

It was recognized that the binding promoter, the aqueous salts or alkalis solution, has a unique effects for these ingredients, that is, by addition of the promoter, actomyosin in the meat is dissolved rapidly and network structure is excellent in elasticity and viscosity is formed by synergetical bridging effect with animal or vegetable albumin, starch, albumen and the like.

### (Embodiments 24 to 26)

The protein-based ingredient was obtained in the same way as in embodiment 1 except that as the protein raw ingredient, instead of sardines frozen at -20°C , sardines refrigerated at -2°C were used and as a granulation machine, instead of a high-speed cutter, homogenizer (Yanagiya Co.) (embodiment 24), silent cutter (Yanagiya Co.) (embodiment 25), and MCB (Iwai Kikai Kogyou Co.) (embodioment 26) were used. Furthermore, to obtain the same protein-based food ingredient in pasty meat as in embodiment 1, the following granulation times were required, 3 minutes (in embodiment 24), 20 minutes (in embodiment 25) and 20 seconds (in embodiment 26), respectively. In embodiment 24 the temperature of the ground meat at finish was 6°C, in embodiment 25 it was 11°C and in embodiment 26 it was -0.2°C. As for the pH, it was 6.9 in embodiment 24, 6.7 in embodiment 25 and 7.0 in embodiment 26, respectively.

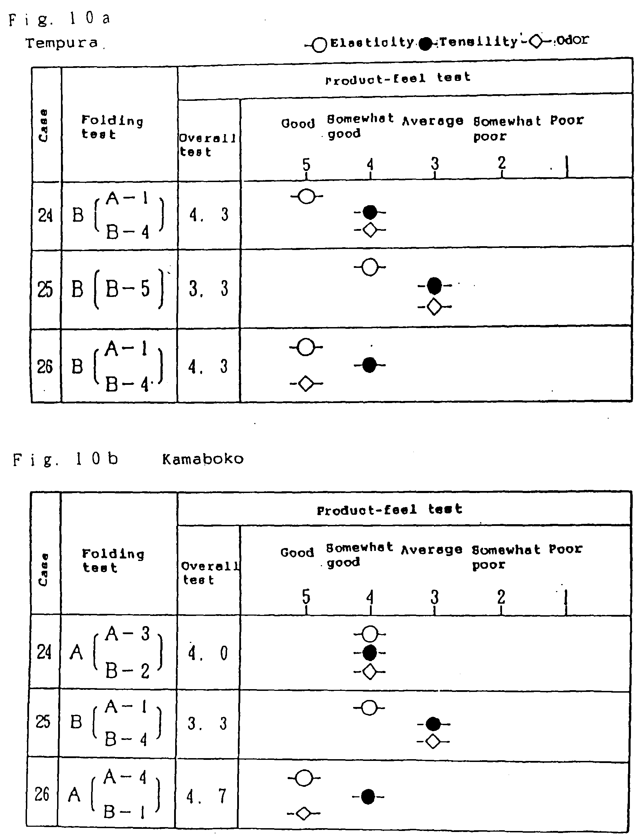

For these protein-based food ingredient, the gel-strength and sensory tests were performed. Results are shown on Table 9 and Figures 10a and 10b.

Figure 10a shows the results of the folding and quality-feeling tests for deep-fried products while Figure 10b shows the results of the same tests for boiled products.

It was found that the protein-based food ingredient has high gel -strength in the same degree as in embodiment 1 and excellent taste based on the results of the sensory test.

As mentioned above, it was found that in embodiment 24 the product has moderate elasticity and softness, in embodiment 25 the drop in pH lead to a decline in elasticity while in embodiment 26 the elevation in pH produce excellent elasticity.

### (Embodiment 27)

The same procedures as in embodiments 6 to 10 were used to obtain the protein-based food ingredient except that before adding water and blending the mixture, as subsidiary materials 13g of albumen, 59g of starch, 33g of sugar and 10g of seasoning were added. The ingredient was frozen at -30°C for one month. Various protein-based food ingredients were obtained from each 200g of beef, chicken, pork and horse meats which had become slightly bold after long-term refrigerated preservation by adding 200g of the frozen ingredients and mixing uniformly with a Hiraga mincing machine. From these various protein-based food ingredients, hamburger steaks, beef steaks, chicken steaks, pork steaks and horse meat steaks were prepared. The sensory test was performed on them among 10 panelists. As a result, it was found that all were free of live-stock meat odor and fish odor and had 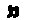 Umami 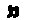 (taste) and the sense of taste different from those of conventional products and were excellent in texture. Although slightly old meats were used in this embodiment, it was found that the odor of the live-stock meat had been eliminated, the minced product was jointly together forming a harmonious whole, and excellent in binding property. Furthermore, the test also revealed that even after being heated, Umami(taste) and moisture of the pasty meat were well-retained, the products have no oily feeling in human mouth, good taste and that water retention ability was excellent for a long time.

### (Embodiment 28)

Steaks were produced from each 100g of the mixed protein-based food ingredient which was obtained in embodiment 27 with a steak molding machine. Both sides of the steak were covered with about 30g size of frozen pork roast meat which was sliced into 3mm thickness. Then the covered stakes were pressed, shaped in definite form and frozen quickly. One week later, the steak covered with sliced meats was taken out of the freezer. At first, the sliced meats had a brownish color characteristic of frozen meat but when it was thawed, it transformed into highly lustrous, very fresh, beautiful colored meat, and an novel raw stake was obtained. Next, the thawed steak was grilled for 3 minutes on both sides at a temperature of 200°C and heated further 2 minutes with remaining heat.

When the steak was cut with a knife and fork, gravy oozed out inside of it. The stakes have high gravy retaining property no livestock meat odor or fish odor, moderate resistance to the teeth, a good seasoning level, and a high yield in grilling. And deforming of the stake was not seen, as the binding with covering sliced meats was secured.

Using the protein-based food ingredient obtained in embodiments 6-10, six pieces of 50g raw steaks were produced respectively. Sandwich-form stakes were prepared by putting a raw stake from meat scrap (in embodiment 10) between two pieces of raw stakes from sardine (in embodiment 6). Similarly, sandwich-form stakes were prepared from a piece of whale raw stake (in embodiment 8) and two pieces of krill raw stakes (in embodiment 7), from a piece of sardine raw stake (in embodiment 6) and two pieces of egg-removed salmon raw stakes (in embodiment 9). All were grilled into the steaks. The resulting grilled stakes were novel and appetizing ones that Umami(taste) of each ingredient was mixed. Thus, it was found that the resulting food products having high protein content and low calorie were obtained by combining high and low calorie ingredient at will.

### (Comparative example 11)

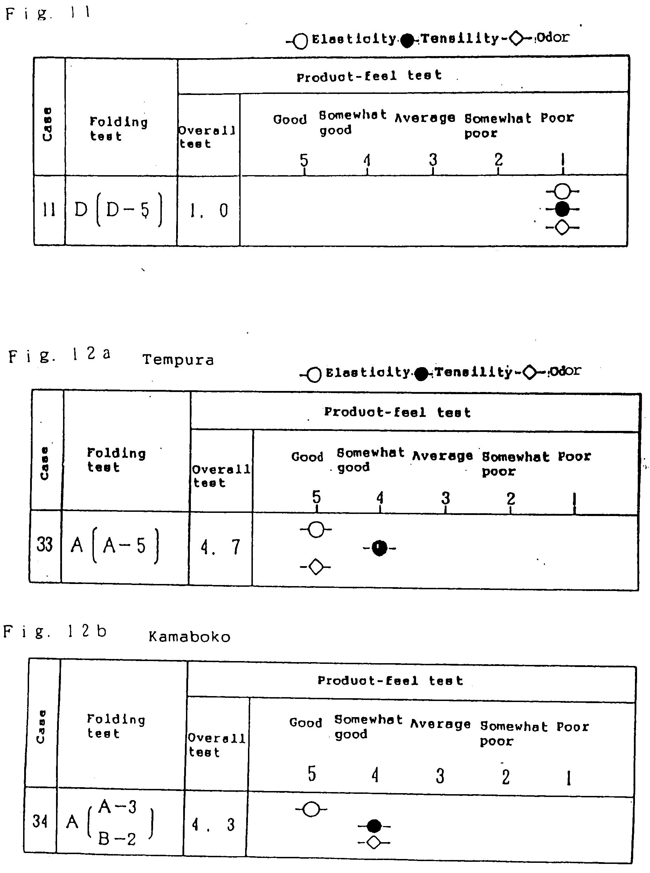

Sardines frozen at -20°C were prepared as protein raw ingredient. The protein-based ingredient was obtained in the same way as in embodiment 1 except that instead of the aqueous NaCl solution, granular NaCl and instead of the aqueous alkali solution, 2.5g of NaHCO₃ powder were used, the gel-strength and sensory tests were performed in the same method as in embodiment 1. Results of comparative example 11 are shown on Table 10 and Figure 11.

Figure 11 shows the results of the folding and quality-feeling tests for deep-fried products.

As apparent from Table 10 and Figure 11, the ingredient has no gelling ability and both Tempura and Kamaboko prepared from the ingredient have broken in two part in the folding test and had no requirements as pasty food product.

### (Embodiments 29 to 32)

The test samples were prepared in the same way as in embodiments 1 and 5 except that in stead of NaHCO₃, 0.9g of NaOH (in embodiment 29), 1.7g of KOH (in embodiment 30), 2.2g of Ca(OH)₂ (in embodiment 31) and 7.9g of tetrasodium pyrophosphate (in embodiment 32) were used. For these samples the gel-strength test, etc. were performed in the same method as in embodiment 1. The results were the same as in embodiments 1 and 5.

### (Embodiment 33)

Protein-based food ingredient was obtained through following steps: For protein raw ingredient, 300g chicken thigh held at 0°C was used. To this, 7.5g of NaCl and 3g of Na₂CO₃ which had been dissolved completely in 25cc water were added separately into the cutter/mixer in the aforementioned granulation process. After mixing the ingredient at high speed for two minutes, as a gelling promoter, 18g of starch and as an emulsifier, 3g of albumen were added. Then as additives, 5g of mirin, 5g of cooking sake, and as chemical seasonings, 1g of sodium glutaminate, and 15g of sugar were dissolved in 30g of water, and the solution was added and the whole mixture was granulated for about one minute. For these ingredients, the gel-strength and sensory tests were performed in the same methood as in embodiment 1. The results are shown on Table 11, Figures 12a and 12b.

Figure 12a shows the results of the folding and quality-feeling tests for deep-fried products. Figure 12b shows the results of the same tests for boiled products.

### (Embodiment 34)

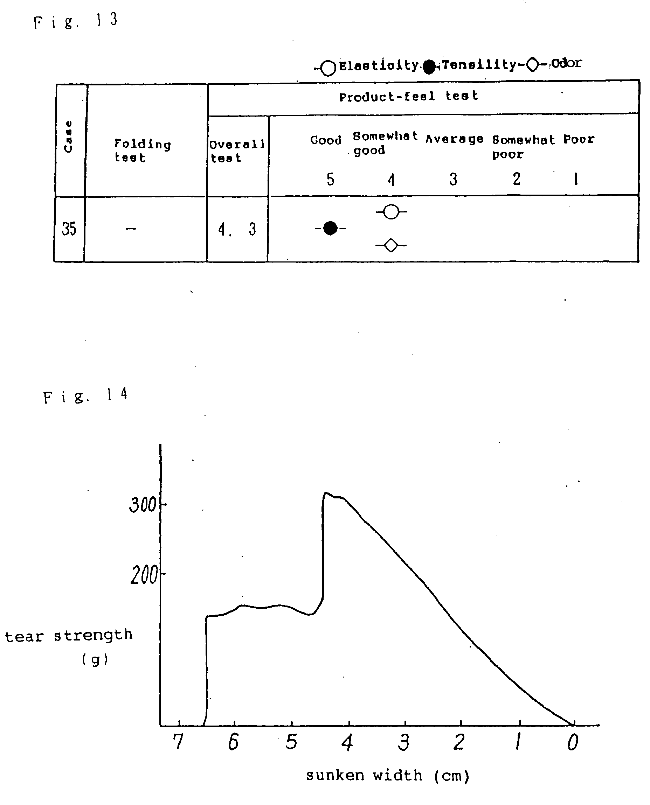

Granulation of 300g of ground chicken meat obtained in embodiment 33 was conducted after adding 50g of swelling soybean, putting them into the frozen cutter/mixer in refrigerated state. A self-emulsified paste was obtained through the actions of emulsifying-component in the soybean. After this paste was mixed/kneaded, 100g of roughly minced (about 5mm) chicken meat was added to it and the mixture was further kneaded, formed into steak-shape and it was heated to the grilled stake. It was found that the resulting stake was excellent in both taste and texture by the tasting test. The gel-strength and sensory tests were performed on this steak-shaped product in the same way as in embodiment 1. The results are shown on Table 11 and Figure 13.

Figure 13 shows the results of the folding and quality-feeling tests for deep-fried products.

### (Embodiment 35)

A stake-shape product was obtained by adding 100g of beef block sliced in 2mm thick, cut into rectangular form, to 300g of ground chiken meat obtained in embodiment 33 and kneading them. And it was heated to the grilled stake. The results of the tasting test were the same as those in embodiment 34. Furthermore, the sensory test was performed in the same way in embodiment 1 on this steak shaped product and the results are shown on Table 11.

### (Embodiment 36)

Ground chicken meat was obtained through following steps. 40kg of frozen broiler thigh was thawed and put into the cutter. At the beginning of high-speed granulation, 1600cc of an aqueous salt solution containg 400g of NaCl was added. After kneading them for 3 minutes, 1600cc of an aqueous solution containing 280g of NaHCO₃, and a solution containing 1.2kg of potato starch, 600cc of mirin(a sweet sake), 600g of cane sugar, and 60g of a mixture of vitamin C and E preparations were added. After kneading them for 5 minutes, the resulting ground chicken meat was divided into 1kg chunks and frozen. This frozen ground chicken meat can be utilized as a multiple purpose food ingredient.

### (Embodiment 37)

The chilled fillets of walleye pollocks were minced by using a meat grinder with a plate of 5mm diameter holes. To 400g of this minced meat (pH 6.8), a solution containing alkali (NaHCO₃), vitamin C and E preparations and sorbitol which are listed in the column of the intermediate processed products of Table 12 was sprayed into the mixer. While the mixer was operated further 3 minutes, relaxation of skeletal muscles and maturation before giving of emulsifying and gelling abilities are promoted. This mixture was frozen at -25°C to produce a intermediate processed product of ground meat. 60 days later, this intermediate processed product was thawed to 0.5°C, put into the cutter/mixer and a solution containing NaCl, sugar, Ajinomoto and mirin which are listed in the column of the final processed products on Table 12, were sprayed into the mixer, the mixture was then granulated for three minutes at high-speed to promote salt dissolution and maturation by giving emulsifying/gelling abilities. In such a way the protein-based food ingredient of the fish meat (final processed product) was produced. The lightness of the intermediate processed product and the final processed product were determined. The results are shown on Table 12. Furthermore, this ground-meat was formed into a disk shape of 10mm thickness with a diameter of 100mm and was deep-fried for 3 minutes to be made Tempura. After cooling to a room temperature, a breaking strength of the Tempura was determined. The results are shown on Figure 14. As apparent from Figure 14, the pasty food products have a breaking strength of 310g, a hollow width of 4.1cm and a gel-strength of 1271g · cm. These values are superior for such products.

The sensory test was performed on this Tempura among 5 panelists. In spite of the fact that the water-unbleached ground meat was used, the color was white, the texture was soft with elasticity and resistance to the teeth was good.

As apparent from Table 12, this embodiment showed that it was possible to obtain a protein-based food product which had a better color tone and greater lightness than the intermediate processed product through aforementiond processing steps.

### (Embodiment 38)

Minced thigh meat was prepared by slicing frozen Australian beef thigh meat, putting the sliced meat into the plate with holes of 5mm diameter. Intermediate processed raw ingredient of ground meat was obtained through following steps. 300g of this minced thigh meat (pH 5.7) was put into the mixer, and as shown in the column of the intermediate processed product on Table 13, 31.6g of 19.5% by weight concentration of NaCl solution, 20g of 10% by weight concentration of NaHCO₃ solution and a sorbitol solution containing vitamin C and E preparations were sprayed and the mixer was operated further 3 minutes to promote salt dissolution to give gelling ability and the resulting ingredient was frozen -25°C. After keeping it in the freezer for 60 days, it was thawed to -5°C, put into the cutter-mixer and after adding a combined solution of mirin, cane sugar and seasonings, the ingredient was ground at high-speed for 3 minutes to obtain a ground beef protein food (final processed-product). After the aforementioned process, the ground beef was filled into casings with a stuffer, and the resulting products were twisted at intervals of 6 to 8cm to be made into a chain. This was then placed into a smoking chamber at 40 to 45°C and dried for 30 minutes and it was smoked further in the cherry chip for 30 minutes at 40 to 45°C. Then, it was boiled for 20 minutes in hot water adjusted to 80°C and cooled in cold water to obtain a beef Vienna sausage. In the conventional method, it was difficult to give emulsifying and gelling abilities to live-stock meat. As a result, only pork was used to make hams and sausages. However, through the processing method in this invention, it became possible to give outstanding binding and gelling abilities to the beef meat. The resulting Vienna sausages had nice resistance to the teeth and high elasticity and man could eat it with keen relish. Thus, meat scrap and the like can now be used for many-purposes.

The lightness of the minced ingredient, intermediate processed product and final processed product were determined. Results are shown on Table 13.

This ground beef could be processed by itself into sausages, but it can also be mixed with fish meat processed similarly to be made into sausages. It can also be made into roughly minced sausage by mixing it with similarly processed minced beef and pork.

As apparent from Table 13, it was found that the final processed product had a higher level of lightness and color tone than those of the raw ingredient. In the conventional method, it was not possible to give emulsifying and gelling abilities to live-stock meat, but it was found that this method in present invention made it possible to elevate the binding property and the gelling ability of the ingredient and to use the meat scrap and the like for many purposes.

### (Embodiment 39)

The chilled, fillets of Atka mackerel were minced by using a chopper having a plate with holes of 5mm diameter. 300g of this minced fish meat (pH 6.7) were put into the mixer and 12g of 15% by weight an aqueous NaHCO₃ solution and a solution containing 10g of 10% by weight an aqueous tripolyphosphoric acid solution and a mixture of sorbitol, vitamins C and E preparations as shown in the column of the intermediate processed products on Table 14, were sprayed into the minced meat and the mixture was blended into the mixer further for 3 minutes to relax the skeletal muscles and to promote maturation. The mixture was then frozen quickly and preserved in the freezer as the intermediate processed raw ingredient of ground meat. After preserving it in the frozen state for 60 days, it was thawed to -5°C and put into the cutter mixer. As shown in the column of the final processed product on Table 14, a combined solution of 35g of 8.5% by weight concentration of an aqueous NaCl solution, mirin, cane sugar and seasonings were sprayed and the mixture was ground by a mixer further for 3 minutes to promote salt -dissolution and give gelling ability to obtain a protein-based ingredient of Atka mackerel ground meat (final processed product). The ingredient was then formed into a shape and steamed. The lightness of the intermediate processed product, final processed product and steamed product was determined. The results are shown on Table 14.

As apparent from Table 14, it was found that the final processed product had an improved lightness and color tone comparing to the intermediate processed product. This ground Atka mackerel made good Tempura when it was given a shape and deep-fried. In addition, the results also revealed that it could be mixed with the ground walleye pollock processed in the sane way. Thus, it was concluded that a large amount of the fishes caught during the fishing season could be utilized effectively by processing, and preserving them in the frozen state as the intermediate processed ingredient, and at the time of distribution thawing and grinding into ground ingredient, and utilizing them various processed foods.

### (Embodiment 40)

30kg of Atka mackerel was processed as follows: heads and internal organs were removed and the cleaned fish body was placed in the 5mm blade meat separator (Abuko Co.) to chop up the meat. The chopped meat was again put into a 2mm blade meat separator to remove scales, small bones and abdominal fish-meat.

3000g of this minced Atka mackerel fish meat was put into the mixer operating at low speed and a solution containing 140g of 15% by weight an aqueous NaHCO₃ solution, 120g of cane sugar, 50cc of mirin, and 5g of a mixture of vitamin C and E preparations were sprayed into the mixer. And while operating the mixer further 5 minutes, relaxation of muscles and maturation before giving of emulsifying and gelling abilities are promoted.

This processed fish meat was divided into two chunks of 1650g, and the one was preserved in the frozen state. The another chunk was put into the cutter and mixer operating at low speed and a solution containing 75cc of 20% by weight concentration of an aqueous NaCl solution, 25cc of sake and 2.5g of sodium glutaminate were sprayed into the cutter and mixer. Then the machine was operated at higher speed for 3 minutes and granulation, salt-dissolution, and maturation with giving gelling ability of the processed fish meat were promoted.

This water-unbleached ground meat of Atka mackerel was formed into a shape of 10mm thickness and 100mm diameter, and was deep-fried for 3 minutes in oil of 165°C to be made Tempura. From the results of the folding test of the resulting five pieces of Tempura, it was found that 3 pieces of Tempura were A rank and 2 were B.

Although the water-unbleached ground fish meat was used, it had no fish odor and nice resistance to the teeth and man could eat it with keen relish. The yield of the fish meat increased by about twofold and it was possible to produce a new kind of highly nutritious, fish paste product.

### (Embodiment 41)

1650g of the water-unbleached frozen intermediate processed fish meat of Atka mackerel obtained in embodiment 40 was frozen at -30°C. After one month, it was then thawed at -2 to -5°C, finely divided, put into the mixer. A solution containg 75g of an aqueous NaCl solution in 20% by weight concentration, 25cc of sake, and 2.5g of Ajinomoto were sprayed into the cutter and mixer. Then the machine was operated at higher speed for 3 minutes and granulation, salt-dissolution, and maturation with giving gelling ability of the processed fish meat were promoted, Furthermore, 50g of finely crushed ice was added and the grinding step was finished by operating the machine at higher-speed for 30 seconds.

The resulting water-unbleached ground meat of Atka mackerel was softer than that of embodiment 40, because the former was obtained by adding water to the latter. But it was possible to shape into a product of 10mm thickness and 100mm diameter and, was deep-fried for 3 minutes at 165°C to be made into Tempura. The folding test was performed on the five pieces of Tempura at room temperature and all were A rank. By tasting them, although the water-unbleached ground fish meat was used they have no fish odor, and they are soft but have enough resistance to the teeth and man could eat them with keen relish.

The water-unbleached method improved the ground-meat yield from raw fishes; furthermore, because water could be added to the ground meat, it was possible to markedly improve the yield of the Tempura as final product in comparison with conventional methods. Formerly, Atka mackerel was rarely used because of its fishy smell, but the processing method in this invention has made it possible to find an effective use for it and even at high-yield.

In this processing method, the chopped meat is processed once to be made into an intermediate processed chopped product and then preserved in the frozen state. Because this intermediate processed product can be preserved in the frozen state and be used as ground meat, it will be possible to process large quantities of this resource during the fishing season and preserve it in the frozen state to be used effectively.

### Industry Applicability

In this invention, through the method described above, it will be possible to realize the following outstanding effects.

Because high concentration aqueous solutions of salts and alkalis are added to water-unbleached fishes and shellfishes, and live-stock meat for granulation, it is possible to promote salt-dissolution, and emulsification and gelling (network formation) with the alkali components and low-molecular nutrients in the fish meat and live-stock meat and thus, obtain a highly nutritious protein-based food ingredient with high-elasticity, bright color tone with no discoloration, and with higher productivity and yield.

Production of intermediate processed product, transportation at frozen state, and preparation of final product at consuming sites allow for realization of protein-based food ingredient appropriate for preparation of many kinds of food product with relatively small amount.

Having unique gelling ability lacking in conventional ingredient, the resulting protein-based food ingredient is excellent in water retention, not subject to freezing denaturation and have improved preservability. By adding subsidiary materials such as binding promoters, saccharide, emulsifiers, vegetable fibers, and animal or vegetable oils and fats, it is possible to adjust the viscosity and the binding property of the ingredient at will, and to form into various shapes. Because the ingredient is freely processed with other food ingredients, it is possible to obtain highly nutritious protein-based food product and to adjust nutritious value such as calory of the food product. Thus, through the method in this invention, it is possible to produce aforementioned protein-based food ingredient and potein-based food proucts from them.

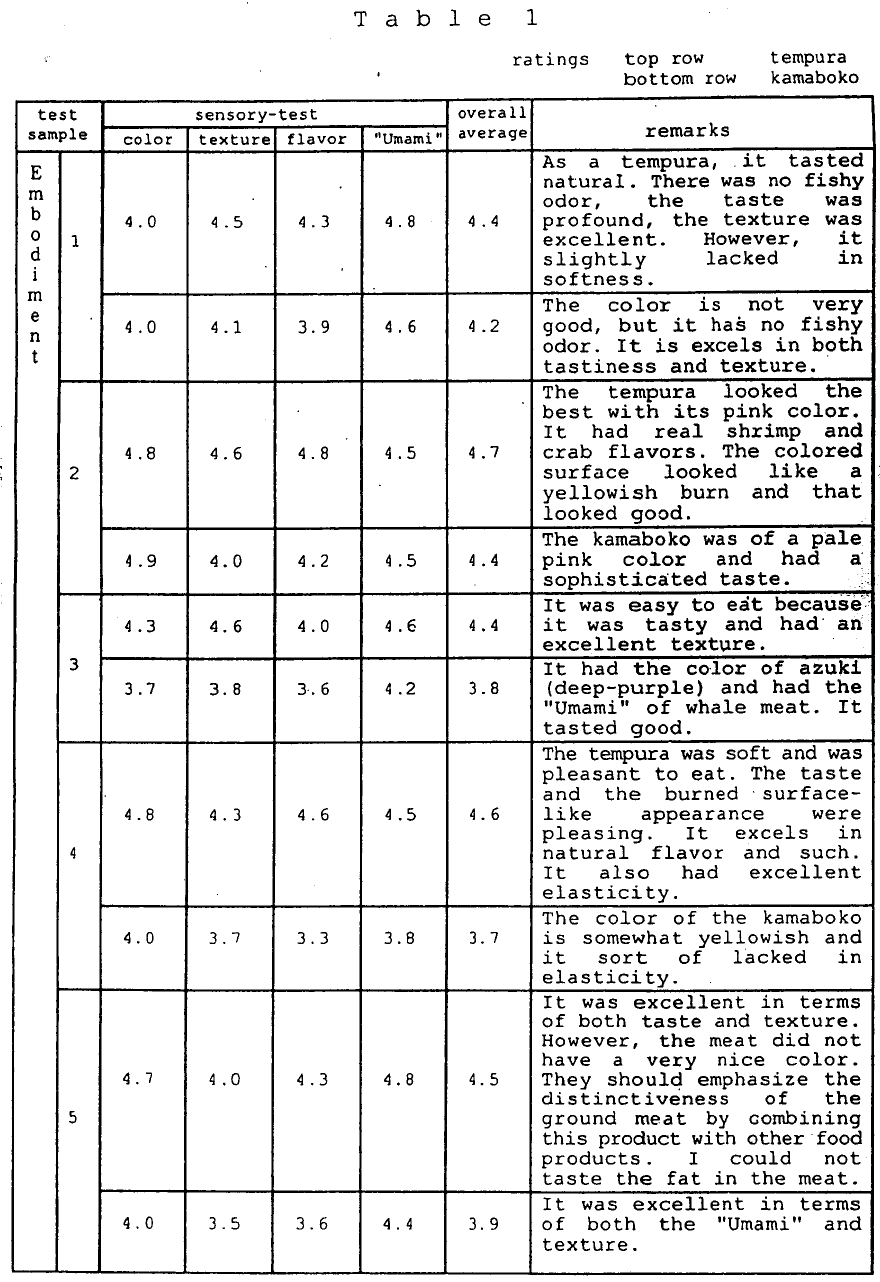

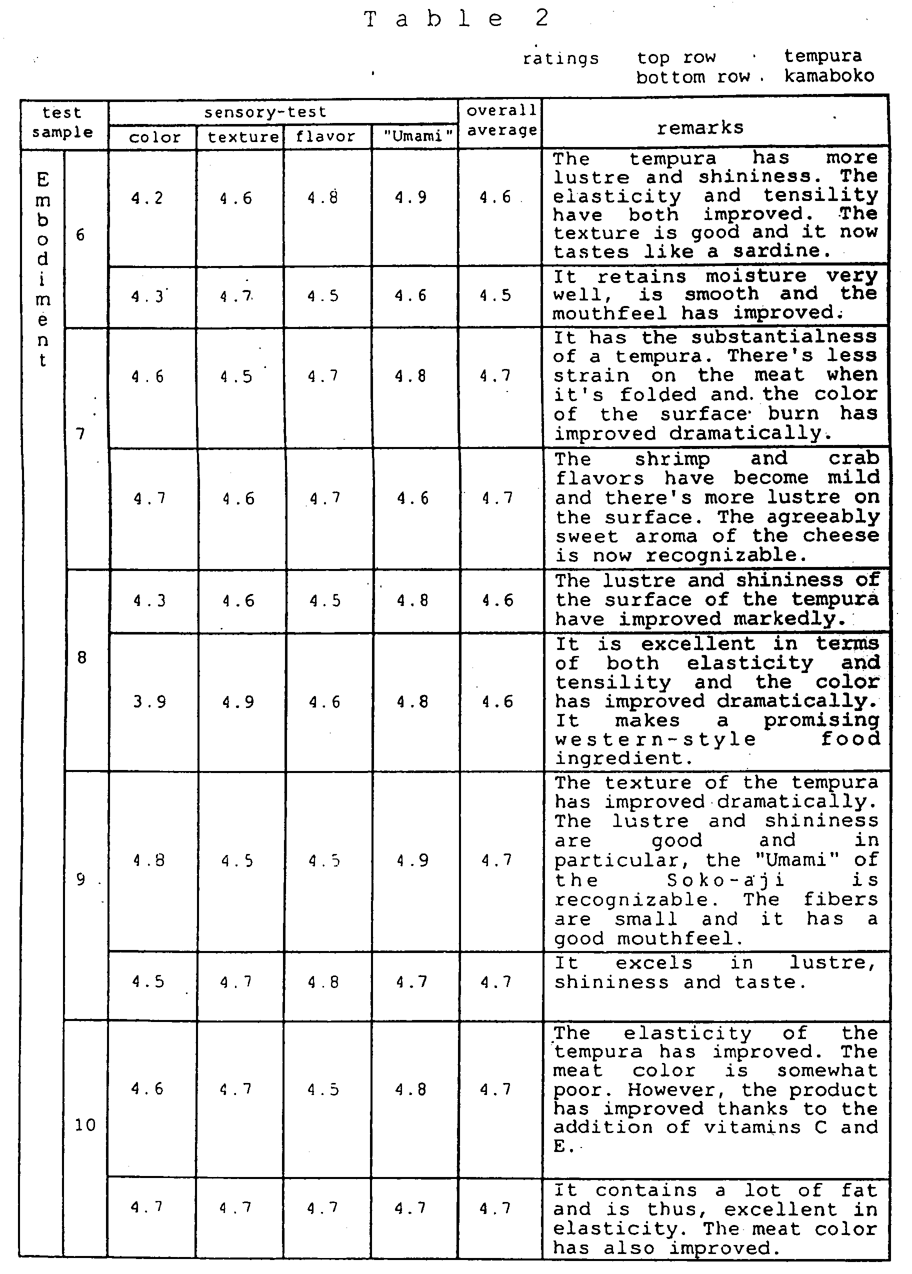

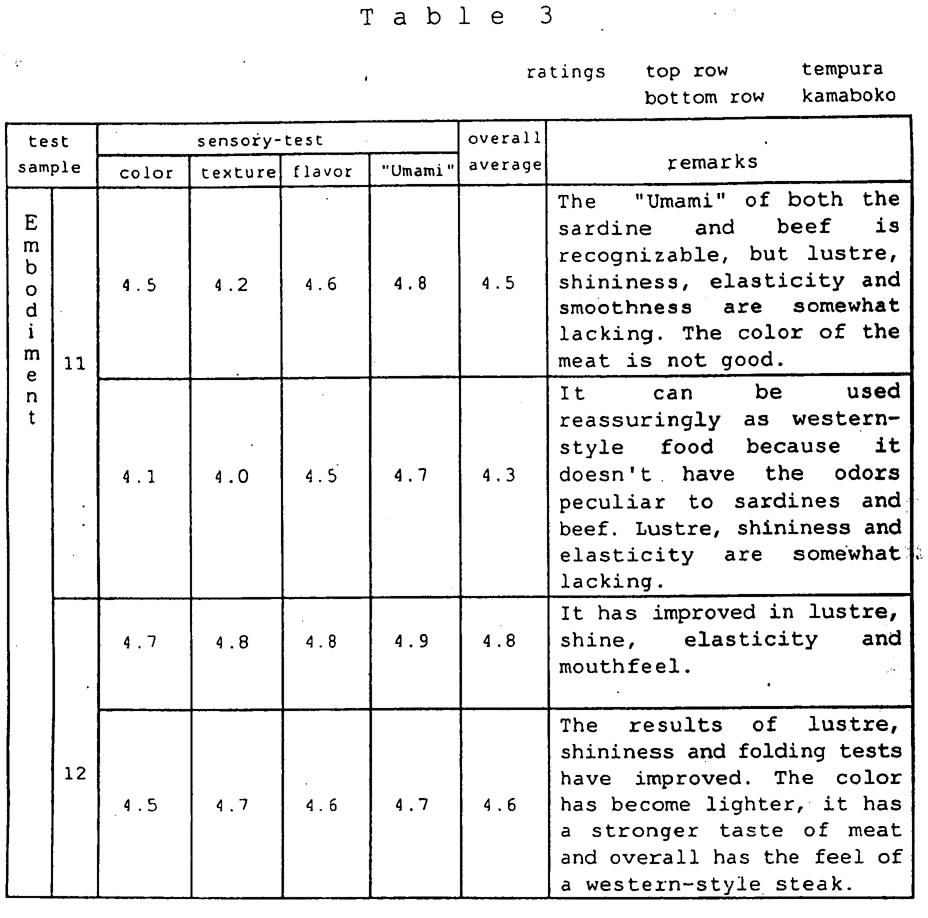

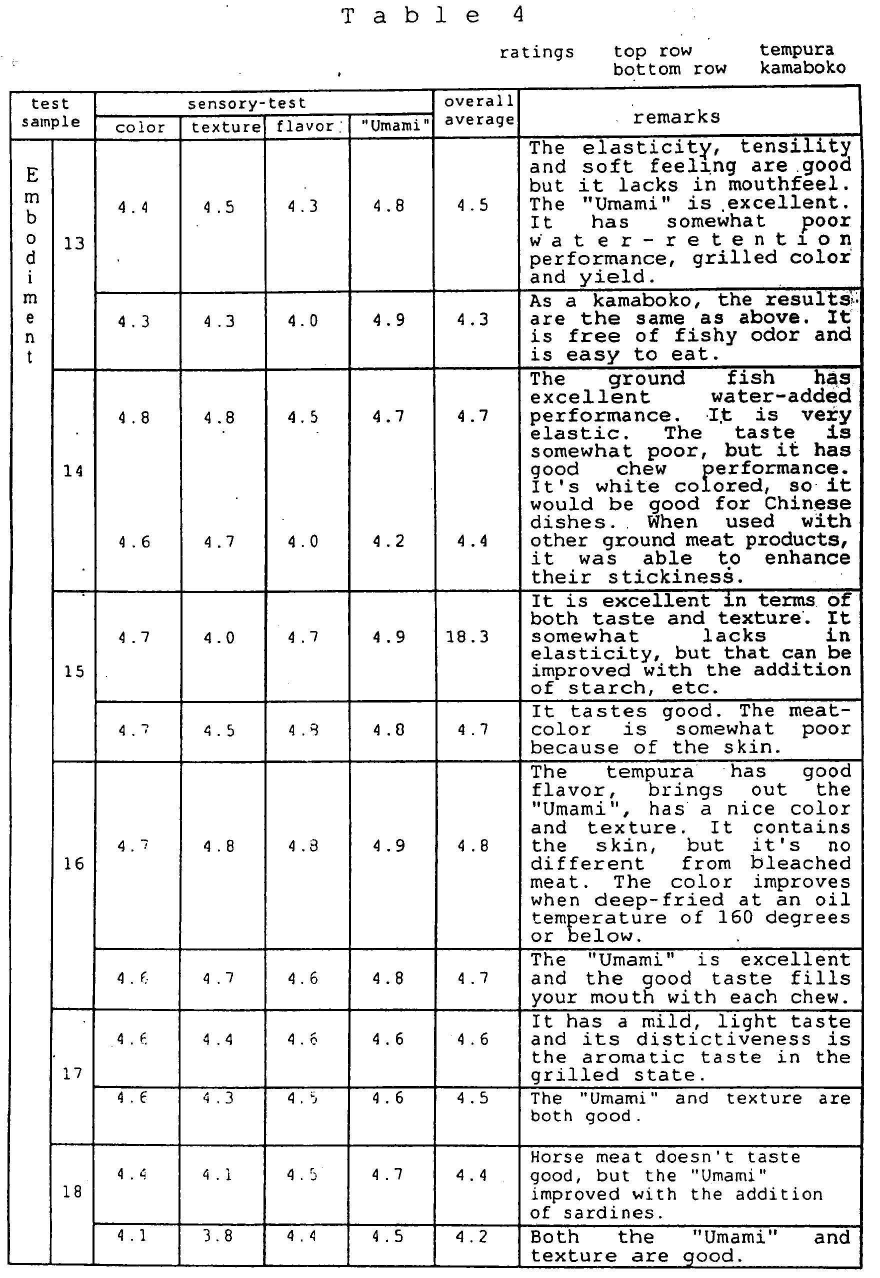

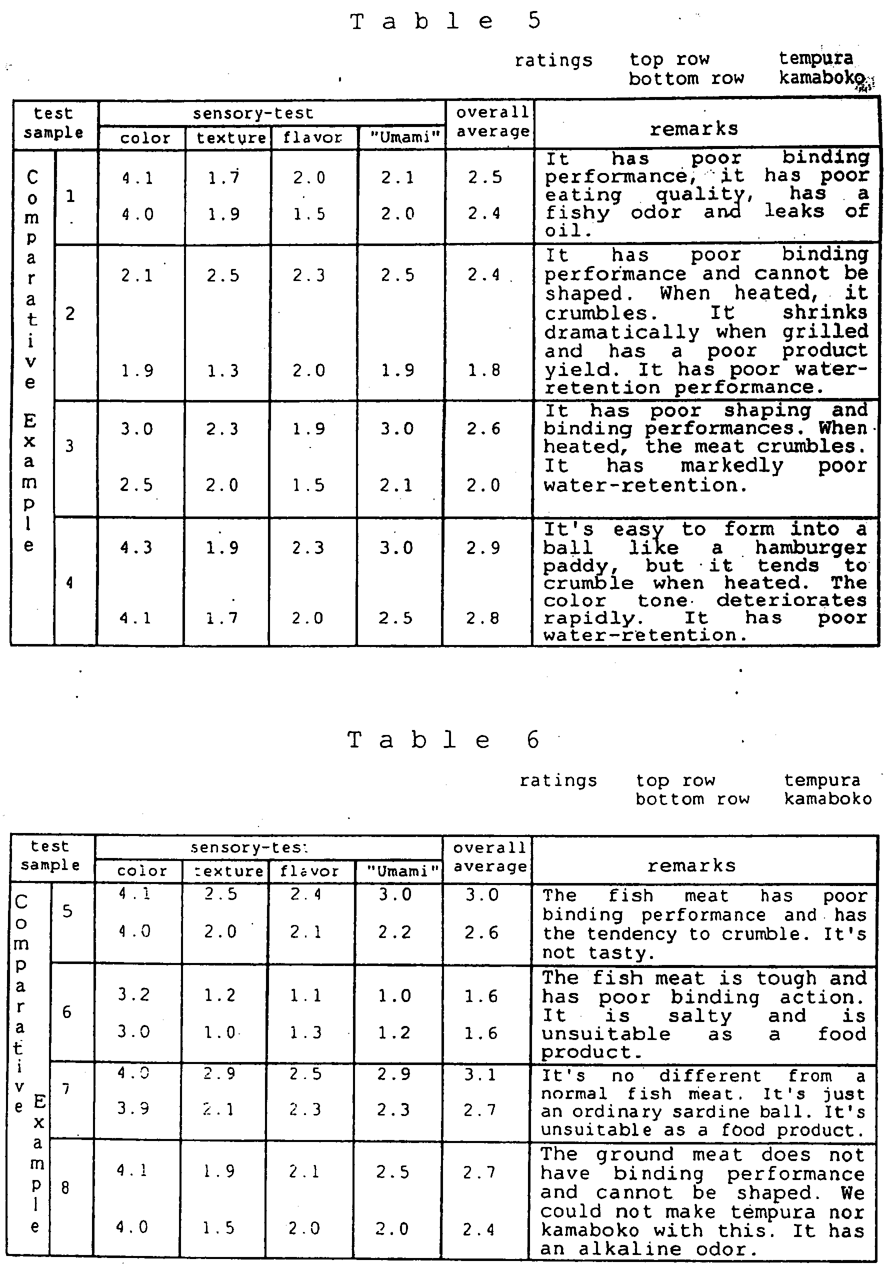

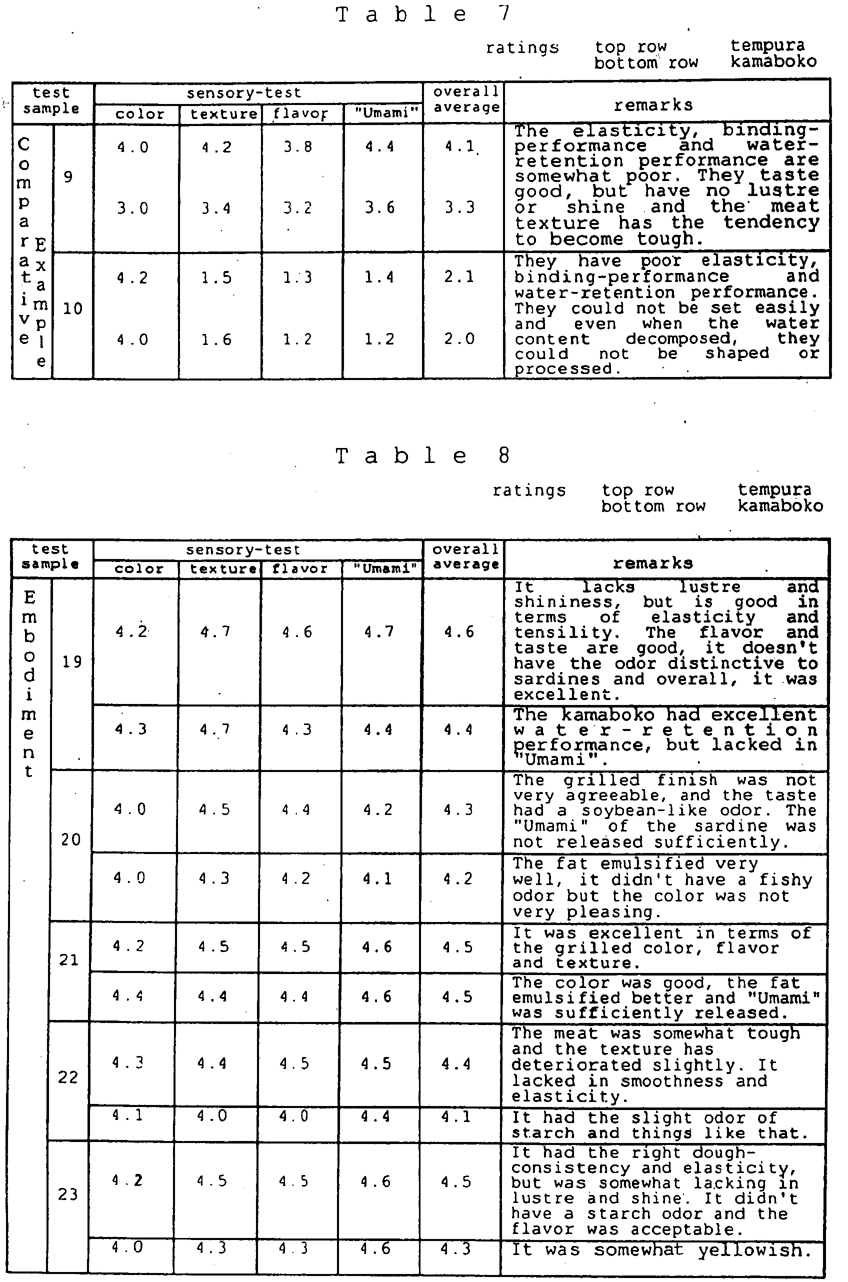

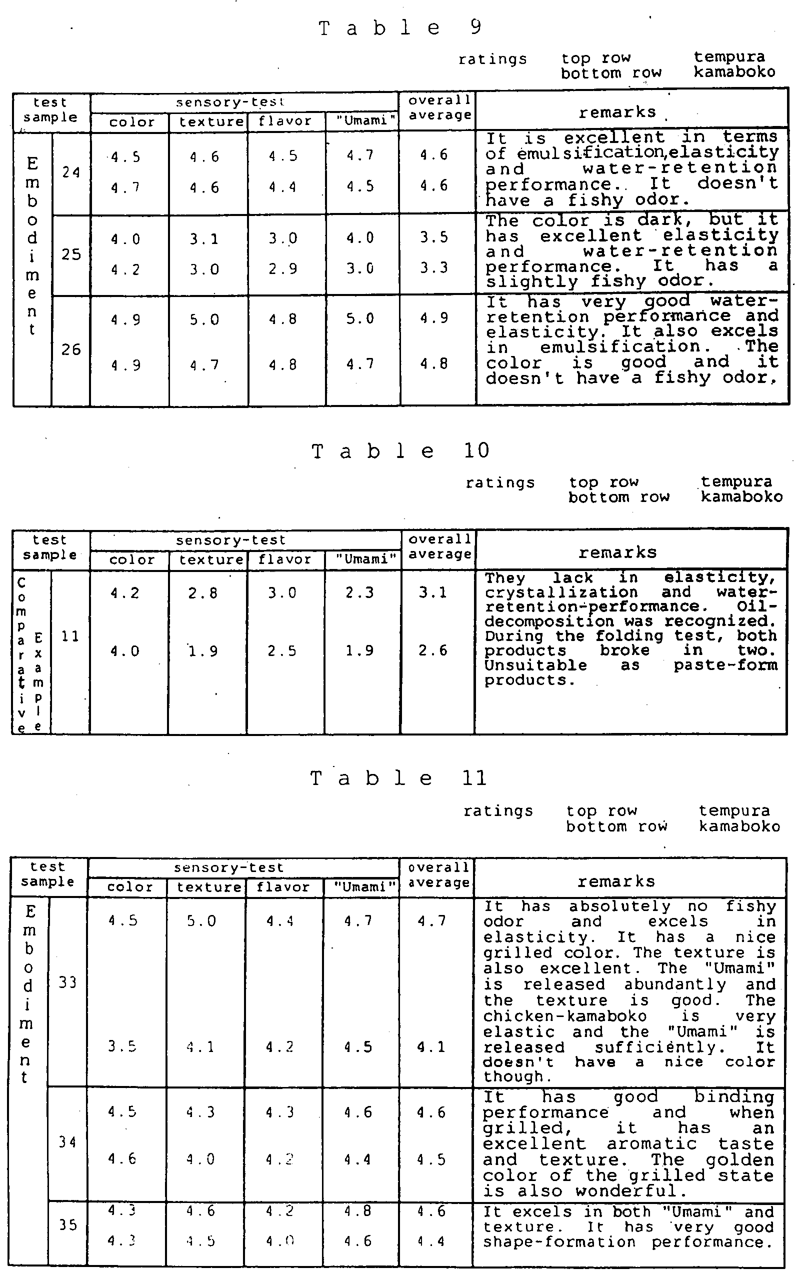

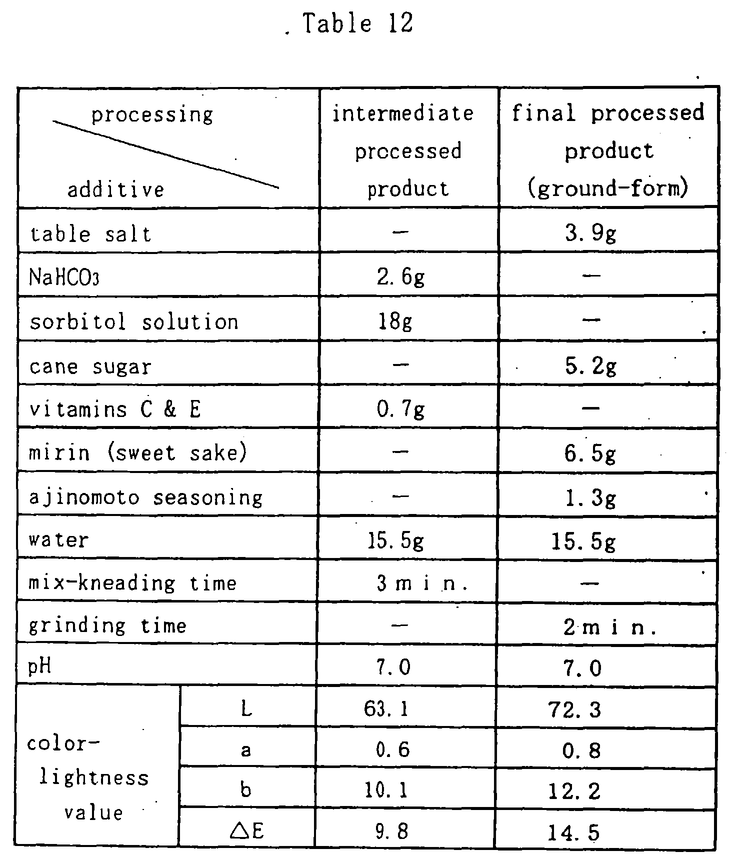

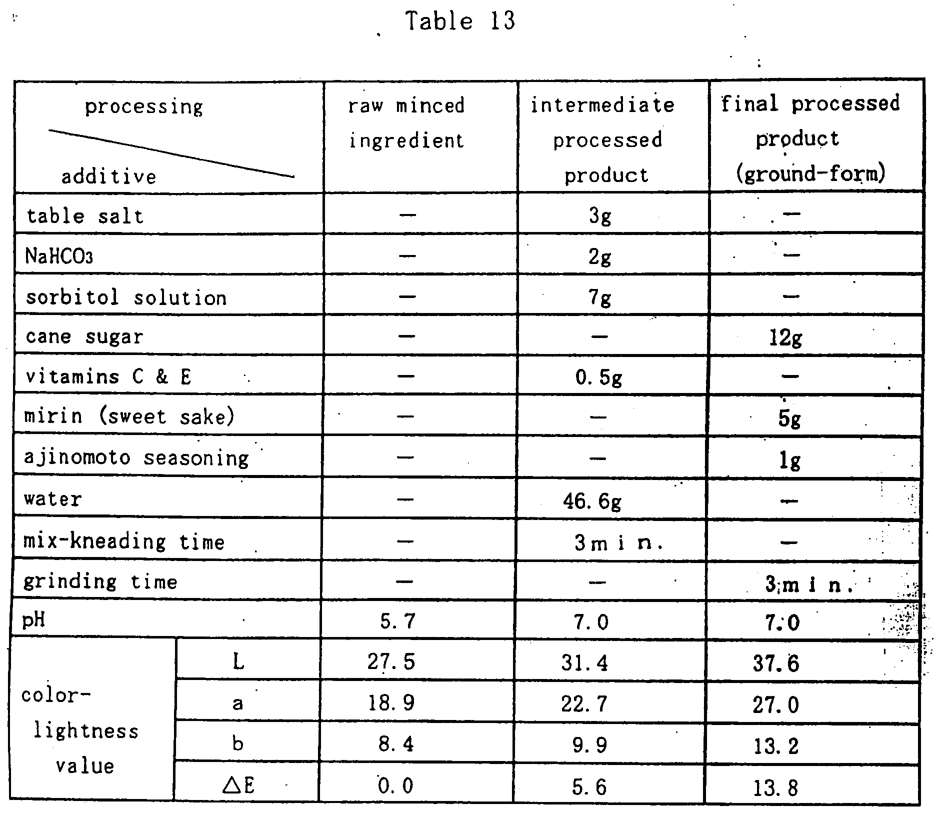

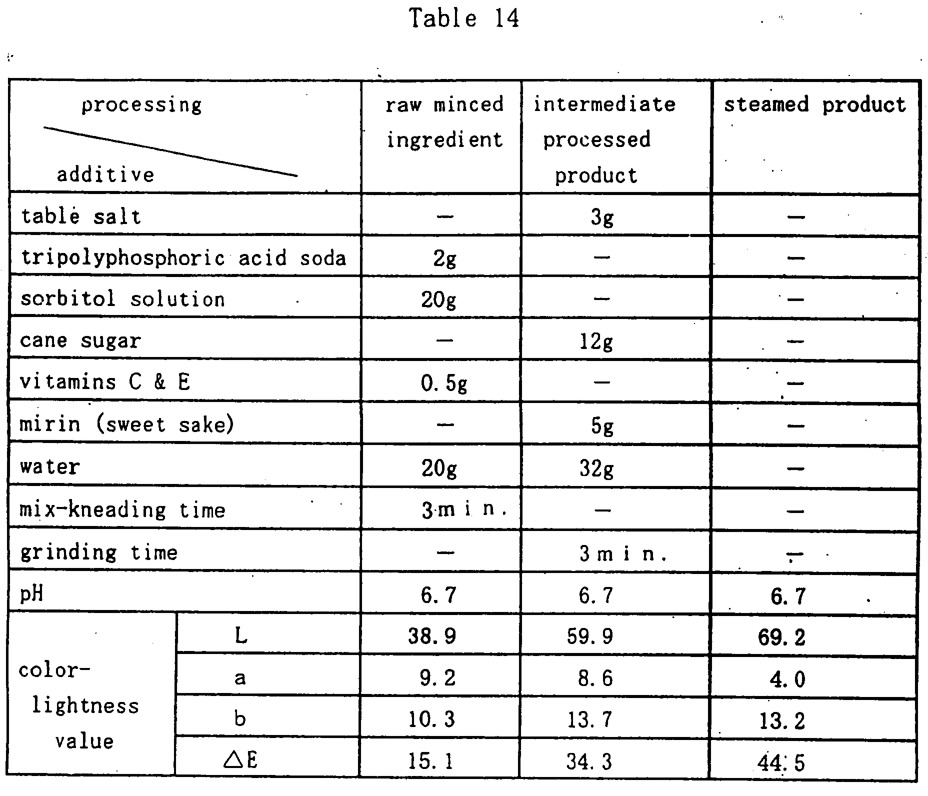

## Claims

1. A method for producing unbleached pasty protein food ingredient comprising the steps of:
a gelling ability giving step wherein 3 to 22 weight parts of an aqueous salts solution in 3 to 35% by weight concentration including at least one of salt selected from the group consisting of NaCl, KCl, CaCl₂ and MgCl₂ is added to and conducted granulation with 100 weight parts of protein-based ingredient made from one or a mixture of unbleached fish/shellfish meat, live-stock meat and whale meat; and
an alkali impregnating step wherein 1 to 19 weight parts of an aqueous alkali solution in 3 to 25% by weight concentration is added to them, and granulation or kneading/mixing are performed.

2. The method for producing the unbleached pasty protein food ingredient comprising the steps of:
the alkali impregnating step wherein 1 to 19 weight parts of the aqueous alkali solution in 3 to 25% by weight concentration is added to and conducted granulation or kneaded/mixed with 100 weight parts of the protein-based ingredient made from one or a mixture of the unbleached fish/shellfish meat, live-stock meat and whale meat; and
the gelling ability giving step wherein 3 to 22 weight parts of the aqueous salts solution in 3 to 35% by weight concentration including at least one salt selected from the group consisting of NaCl, KCl, CaCl₂ and MgCl₂ is added and conducted granulation.

3. The method for producing the unbleached pasty protein food ingredient according to claim 1 or 2 comprising an additive solution adding step wherein after said gelling ability giving step and/or said alkali impregnating step, an aqueous solution including at least one of additive selected from the group cosisting of saccharide, vitamin C preparation, vitamin E preparation, powdered albumen, antioxidant is added to and conducted granulation or kneaded/mixed with fresh raw meat.

4. The method for producing the unbleached pasty protein food ingredient according to claim 3 comprising a water mixing step wherein after said additive solution adding step, 1 to 80 weight parts of water is added to and mixed with 100 weight parts of the protein raw ingredient obtained from said additive solution adding step.

5. The method producing for the unbleached pasty protein food ingredient comprising the steps of:
a pretreatment step wherein one or the mixture of unbleached fish/shellfish meat, live-stock meat and whale meat are adjusted to a grain size to 0.2 to 5 mm;
the alkali solution impregnating step wherein 1 to 19 weight parts of the aqueous alkali solution in 3 to 25% by weight concentration is added to and granulated or kneaded/mixed with 100 weight parts of the ingredient obtained from said pretreatment step:
the additive solution adding step wherein the solution including at least one of the additive selected from the group consisting of saccharide, vitamin C preparation, vitamin E preparation, powdered albumen, antioxidant is added to, and conducted granulation or kneaded/mixed with the meat-based ingredient obtained from said alkali impregnating step;
a freezing step wherein the intermediate processed meat obtained from said additive solution adding step is frozen;
thawing and pulverizing steps wherein the intermediate processed neat frozen in said freezing step is thawed or pulverized at frozen state;
a pasty meat processing step wherein 3 to 22 weight parts of the aqueous salts solution in 3 to 35% by weight concentration including at least one of the salt selected from the group consisting of NaCl, KCl, CaCl₂ and MgCl₂ is added to 100 weight parts of the thawed and pulverized ingredient obtained from said thawing and pulverizing steps and conducted granulation under high concentrated solution of salts and to give gelling ability by salt dissolution and to process to pasty meat; and
as required, a water mixing step wherein 1 to 80 weight parts of an aqueous solution of 0.05 to 15% by weight concentration including seasoning, binding promoter such as starch, and powdered blood plasma at need, is added to and mixed with 100 weight parts of the pasty meat obtained from said pasty meat processing step.

6. The method for producing the unbleached pasty protein food ingredient comprising the steps of:
the pretreatment step wherein 5 to 25 weight parts of water is added to 100 weight parts of the protein-based ingredient from either the unbleached fish/shellfish or live-stock meat whose foreign substances are difficult to remove, and the mixture is adjusted to the grain size to 0.2 to 5 mm, passed through a colander, and dehydrated at need;
the additive solution adding step wherein the solution including at least one of the additive selected from the group consisting of saccharide, vitamin C preparation, vitamin E preparation, powdered albumen, antioxidant are added to, and conducted granulation or kneaded/mixed with any one or more of the fresh raw meat obtained from said pretreatment step;
the freezing step wherein any one or more of the intermediate processed meat obtained from said additive solution adding step is frozen;
the thawing and pulverizing steps wherein the intermediate processed seat frozen in said freezing step is thawed and pulverized at frozen state;
the pasty meat processing step wherein 1 to 19 weight parts of the aqueous alkali solution in 3 to 25% by weight concentration is added to, and conducted granulation or kneaded/mixed with 100 weight parts of the intermediate processed meat obtained from said thawing and pulverizing steps, and then 3 to 22 weight parts of the aqueous salt solution in 3 to 35% by weight concentration including at least one of the salt selected from the group consisting of NaCl, KCl, CaCl₂ and MgCl₂ is added to 100 weight parts of the intermediate processed meat, conducted granulation under the high concentrated solution of salts to give the gelling ability by dissolving the protein of the intermediate processed meat in salt; and
as required, the water mixing process wherein 1 to 80 weight parts of the aqueous solution of 0.05 to 15% by weight concentration including seasoning, binding promoter such as starch, and powdered blood plasma at need is added to and mixed with 100 weight parts of the intermediate processed meat.

7. The method for producing the unbleached pasty protein food ingredient comprising the steps of:
the pretreatment step wherein unbleached small size fishes whose foreign substances are difficult to remove, high fat fishes such as sardines or sauries, or round or dressed fishes in lower freshness, put into a scale-removing machine to remove scales, and heads and internal organs are removed and chopped by a fish meat separator make protein-based ingredient, and then 1 to 19 weight parts of the aqueous alkali solution in 3 to 25% by weight concentration is added to 100 weight parts of the protein-based ingredient, conducted granulation, adjusted to the grain size to 0.2 to 5 mm, passed through a colander and dehydrated;
the additive solution adding step wherein the solution including at least one of the additive selected from the group consisting of saccharide, vitamin C preparation, vitamin E preparation, powdered albumen, antioxidant are added and conducted granulation or kneaded/mixed to the protein-based ingredient;
the freezing step wherein any one or more of the intermediate processed meat obtained from said additive solution adding step is frozen;
the thawing and pulverizing steps wherein the intermediate processed meat frozen in said freezing step is thawed or pulverized at frozen state;
the pasty meat processing step wherein 3 to 22 weight parts of the aqueous salts solution of 3 to 35% by weight concentration including at least one of the salt selected from the group consisting of NaCl, KCl, CaCl₂ and MgCl₂ is added to 100 weight parts of the intermediate processed meat obtained from said thawing and pulverizing steps, and conducted granulation under the high concentrated solution of salts to give the gelling ability and by dissolving the protein of the intermediate meat in salt;
the water mixing step wherein 1 to 80 weight parts of the aqueous solution of 0.05 to 15% by weight concentration including seasoning, binding promoter such as starch, and powdered blood plasma at need is added to and mixed with 100 weight parts of the intermediate processed meat.

8. The method for producing the unbleached pasty protein food ingredient according to any one of claims 1 to 5 wherein alkali in the alkali solution is one alkali or a mixture of two or more selected from the group consisting of Na₂CO₃, K₂CO₃, NaOH, KOH, Ca(OH)₂ NaHCO₃, KHCO₃, Ca(HCO₃)₂, NH₄HCO₃, monosodium phosphate, disodium phosphate, trisodium phosphate, sodium pyrophosphate, sodium phosphate, potassium metaphosphate, sodium metaphosphate, sodium polyphosphate, potassium polyphosphate, dipotassium phosphate, tripotassium phosphate.

9. A protein-based food ingredient made by the method for producing the unbleached pasty protein ingredient of any one of claims 1 to 8.

10. A protein-based food wherein the protein-based food ingredient of claim 9 is mixed with at least one of the additive selected from the group consisting of seasoning, binding promoter, emulsifier, functioning agent, adhesive promoter, preservative, vegetable fiber and animal or vegetable oils and fats and/or other food ingredients.

11. The protein-based food wherein the protein-based food ingredient of claim 9 is formed in either board or stick shapes and layered or rolled thereon with other food ingredients.

12. The protein-based food wherein the protein-based food ingredient of claim 9 is mixed and foaming-processed with other food ingredients.
